# EUROPÄISCHE PATENTANMELDUNG

(11) **EP 3 855 359 A1**
(43) Veröffentlichungstag der Anmeldung: **28.07.2021**
(21) Anmeldenummer: 20153475.7
(22) Anmeldetag: 23.01.2020
(51) Int. Cl.: G06K 9/62

(54) **KABELBEARBEITUNGSSTATION, KABELMASCHINE MIT KABELBEARBEITUNGSSTATIONEN SOWIE COMPUTERIMPLEMENTIERTES VERFAHREN**

(71) Anmelder: Schleuniger AG, 3608 Thun (CH)
(72) Erfinder: WALSER, Markus, 3604 Thun (CH); HUGGLER, Christian, 3612 Steffisburg (CH)
(74) Vertreter: Patentbüro Paul Rosenich AG

(57) **Zusammenfassung**

Die Erfindung betrifft eine Kabelbearbeitungsstation 20 zum Bearbeiten eines Kabelendes 12 eines Kabels 10, umfassend zumindest ein erstes Werkzeug 22 zum Bearbeiten des Kabels 10, eine Steuereinrichtung 40 zum Steuern des zumindest ersten Werkzeugs 22 und eine erste bildgebende Sensoreinrichtung 25 zum Detektieren zumindest eines Bildes zumindest eines Kabelendes 12 des Kabels 10, sowie ein Bildverarbeitungssystem 30. Das Bildverarbeitungssystem 30 ist mit der Steuerungseinrichtung 40 zum Austausch von steuerungsspezifischen Parametern verbunden und so konfiguriert, um aus dem zumindest einen detektierten Bild einen ersten kabelspezifischen Bildparameter sowie zumindest einen zweiten kabelspezifischen Bildparameter zu erkennen sowie einen steuerungsspezifischen Parameter zu erstellen und an die Steuerungseinrichtung 40 zum Steuern des ersten Werkzeugs 22 zu übertragen. Weiters betrifft die Erfindung ein computerimplementiertes Verfahren zum automatischen Bestimmen und Erzeugen von Steuerdatensätzen und/oder steuerungsspezifischen Parametern zum Steuern zumindest einer Kabelbearbeitungsstation sowie eine Kabelverarbeitungsmaschine mit zumindest einer Kabelbearbeitungsstation.

## Beschreibung

Die Erfindung betrifft eine Kabelbearbeitungsstation, eine Kabelmaschine mit Kabelbearbeitungsstationen sowie ein computerimplementiertes Verfahren gemäss den unabhängigen Ansprüchen.

Optische Kabelinspektionseinrichtungen sind an sich bekannt. Diese werden zu Qualitätskontrolle in der Kabelverarbeitung eingesetzt, um fertig verarbeitete Kabelsysteme, bestehend aus einem Kabelende und einem Kabelanschlusselement, wie beispielsweise einen Stecker zum elektrischen oder optischen Verbinden von einem Kabel mit einem Endgerät, stichprobenmässig zu kontrollieren.

Die US20020036770A1 beschreibt eine solche Inspektionseinrichtung, mit welcher der Befestigungszustand eines elektrischen Kabels durch ein Crimpstück des Anschlussmetallfittings beurteilt werden kann. Die Inspektionseinrichtung des Anschlussmetallfittings weist eine Beleuchtungslampe, eine CCD-Kamera zum Aufnehmen eines Bildes, eine Dunkelbox und eine Steuereinheit auf. Die Steuereinheit beurteilt das Gute oder Schlechte des Crimpzustands von mindestens einem Teil des Crimpstücks, auf der Grundlage eines Dunkel-Bereichs in einem Inspektionsbereich des Bildes. Ein ähnliches Verfahren ist aus EP 0 702 227 A1 bekannt.

Nachteilig an diesen bekannten Lösungen ist, dass Fehler erkannt werden, sodass die fehlerhaften Teile aussortiert werden können, eine tiefergreifende Änderung des Kabelbearbeitungsprozesses geht damit nicht einher.

Die EP 3 146 600 B1 zeigt eine Crimpvorrichtung mit einer Bildaufnahmevorrichtung, welche einen Positioniervorgang eines Kabels vor einem Crimpvorgang relativ zu einem Anschlusselement überwacht, indem die Bildaufnahmevorrichtung die Lage eines Kabelendes des Kabels detektiert und der Steuerungseinrichtung der Crimpvorrichtung übermittelt.

Nachteilig an diesen bekannten Lösungen ist, dass ein falscher Kabeltyp nicht in der Crimpvorrichtung nicht erkennbar ist. Weiters muss das Crimpwerkzeug für die Bildaufnahme über einen langen Zeitraum in einem offenen Zustand verharren, um ein Bild vom Anschlusselement detektieren zu können. Dies führt zu einer verhältnismässig langen Stillstandszeit im Prozess.

Aufgabe der vorliegenden Erfindung ist es somit, eine Kabelbearbeitungsstation zu schaffen, welche zumindest einen der vorgenannten Nachteile vermeidet und insbesondere eine rasche Nachführung des Kabelbearbeitungsprozesses ermöglicht, nachdem Abweichungen von einem Ideal-Kabelbearbeitungsprozess festgestellt wurden. Darüber hinaus soll eine Kabelbearbeitungsmaschine geschaffen werden, welche eine hohe Kabelbearbeitungsprozesssicherheit aufweist. Weiters soll ein computerimplementiertes Verfahren zum Steuern zumindest einer Kabelbearbeitungsstation geschaffen werden, welches Produktionsfehler in der Kabelbearbeitungsstation korrigiert und den Kabelbearbeitungsprozess somit verbessert.

Die Aufgabe wird durch die Merkmale der unabhängigen Ansprüche gelöst. Vorteilhafte Weiterbildungen sind in den Figuren und in den abhängigen Patentansprüchen dargelegt.

Eine erfindungsgemässe Kabelbearbeitungsstation zum Bearbeiten eines Kabelendes eines Kabels, insbesondere eines elektrischen oder optischen Kabels, umfassend zumindest ein erstes Werkzeug zum Bearbeiten des Kabels und eine Steuereinrichtung zum Steuern des zumindest ersten Werkzeugs. Weiter umfasst die erfindungsgemässe Kabelbearbeitungsstation zumindest eine erste bildgebende Sensoreinrichtung zum Detektieren zumindest eines Bildes zumindest eines Kabelendes des Kabels, sowie ein Bildverarbeitungssystem. Das Bildverarbeitungssystem ist mit der Steuerungseinrichtung zum Austausch von steuerungsspezifischen Parametern verbunden und ist so konfiguriert, um aus dem zumindest einen detektierten Bild einen ersten kabelspezifischen Bildparameter sowie zumindest einen zweiten kabelspezifischen Bildparameter zu erkennen, sowie auf Basis des ersten kabelspezifischen Bildparameters und des zweiten kabelspezifischen Bildparameters zumindest einen steuerungsspezifischen Parameter zu erstellen und an die Steuerungseinrichtung zum Steuern des ersten Werkzeugs zu übertragen.

In anderen Worten ausgedrückt, wird der zumindest eine steuerungsspezifische Parameter auf Basis einer Kombination des zumindest einen ersten kabelspezifischen Bildparameters und den zweiten kabelspezifischen Bildparameters erstellt. Das erste Werkzeug ist auf Basis des zumindest einen steuerungsspezifischen Parameters automatisch steuerbar bzw. regelbar, sodass ein rasches Nachführen des Kabelbearbeitungsprozesses in der Kabelbearbeitungsstation möglich ist.

Als erster kabelspezifischer Bildparameter wird beispielsweise der elektrische Leiter erkannt, auch typischerweise als Kabelkern oder Kabelader bezeichnet, und als zweiter kabelspezifischer Bildparameter wird beispielsweise die Kabelisolierung erkannt, auch typischerweise als Ummantelung des elektrischen Leiters bezeichnet. Die Kombination des zumindest einen ersten kabelspezifischen Bildparameters und des zweiten kabelspezifischen Bildparameters führt in weiterer Folge im Bildverarbeitungssystem zu einem spezifischen Kabeltyp, welcher mit der Kabelbearbeitungsstation bearbeitbar ist oder zur Bearbeitung in der Kabelbearbeitungsstation vorgesehen ist. Beispielsweise ist eine Kabelbearbeitungsstation eine Abisolierstation zum Abisolieren des Kabelendes oder eine Crimppresse zum Crimpen eines Kabelanschlusselements an den elektrischen Leiter, oder andere, wobei das erste Werkzeug ein Kabelförderer oder ein Abisoliermesser oder ein Crimpwerkzeug ist. Weiters kann die Kabelbearbeitungsstation eine Dichtelementbestückung umfassen, womit eine Dichtung auf das Kabelende bzw. auf den elektrischen Leiter aufbringbar ist. Als erstes Werkzeug kann dabei ein Mittel zum Aufbringen der Dichtung auf das Kabel eingesetzt werden, wie typischerweise ein Greifermechanismus oder eine pneumatische Bestückungseinrichtung. Die Werkzeuge sind typischerweise jeweils mit einem Antrieb derart antreibbar, dass diese die vorgesehenen Prozessarbeitsschritte durchführen können. Die jeweiligen Antriebe der Werkzeuge sind mit der Steuereinrichtung zum Austausch der steuerungsspezifischen Parameter elektrisch verbunden.

Als erste bildgebende Sensoreinrichtung kann eine ortsfeste Kamera oder ein Zeilensensor verwendet werden, welcher mit einem typischen Rasterverfahren relativ über das Kabel bewegbar ist. Eine ortsfeste Kamera kann platzsparend an der Kabelbearbeitungsstation positioniert werden. Ein bewegbarer Zeilensensor kann ein grösseres Kabelende am Kabel detektieren. Alternativ kann die Kamera auf einer Bewegungseinrichtung an der Kabelbearbeitungsstation angeordnet sein, sodass diese, beispielsweise schwenkbar, von dem ersten Werkzeug der Kabelbearbeitungsstation hin zu einem weiteren Werkzeug der Kabelbearbeitungsstation bewegbar ist. Die Kamera kann insbesondere mehrere Bilder vom Kabelende des Kabels detektieren, um eine grössere Auswahl an detektierten Bilder dem Bildverarbeitungssystem zur Verfügung zu stellen. Die hier angeführte Kamera weist typischerweise ein zoombares Objektiv und diverse handelsübliche Filterelemente auf.

Weiters kann eine weitere bildgebende Sensoreinrichtung an der Kabelbearbeitungsstation angeordnet sein, sodass das zumindest eine detektierte Bild aus mehreren Teilbildern bestehen kann und/oder aus mehreren Aufnahmewinkeln zum Kabelende des Kabels detektierbar ist, um die Bildqualität bzw. die Aufnahmequalität der detektierten Bilder zu verbessern.

Vorzugsweise ist ein KI-Modul vorhanden, welches mit der zumindest einen ersten bildgebenden Sensoreinrichtung verbunden ist und so konfiguriert ist, um aus dem zumindest einen detektierten Bild den ersten kabelspezifischen Bildparameter sowie zumindest den zweiten kabelspezifischen Bildparameter zu erfassen. Ein KI (künstliche Intelligenz) - Modul ist beispielsweise mit externen bzw. separaten Bilddaten oder Parametern (Material, Struktur, Farbe, Form, usw.) zum jeweiligen Kabeltyp trainierbar. Dafür kann das KI-Modul eine Recheneinheit aufweisen, um einfach trainiert zu werden. Somit ist dieses KI-Modul in einem breiten Anwendungsspektrum verwendbar, wobei die Genauigkeit, insbesondere beim Analysieren von vielen verschiedenen Kabeltypen, in der Anwendung verbessert ist. Weiters kann die Auswertegeschwindigkeit im Bildverarbeitungssystem verbessert werden. Das KI-Modul arbeitet flexibel mit unterschiedlichen Kabeltypen und auch mit unterschiedlichen Kabelanschlusselementen.

Bevorzugt umfasst das KI-Modul zumindest ein neuronales Netzwerk, welches ausgebildet ist, das zumindest eine detektierte Bild zu analysieren, wobei beispielsweise das neuronale Netzwerk mithilfe des zumindest einen detektierten Bildes trainierbar ist. Das neuronale Netzwerk ist mit Bildparametern trainierbar, um eine, je nach Qualität der Trainingsbilder bzw. Referenzbilder oder Referenzkonturen, verbesserte zukünftige Prüfung der Prozessarbeitsschritte in der Kabelbearbeitungsstation, hin zu dem Ideal-Kabelbearbeitungsprozess zu ermöglichen. Weiters ermöglicht das KI-Modul ein weitgehend von einem Operator unabhängiges Durchführen des Kabelbearbeitungsprozesses bzw. der darin vorkommenden mehreren Prozessarbeitsschritte, da das neuronale Netzwerk die Aufgaben des Operators übernimmt. Die Stillstandzeit an der Kabelbearbeitungsstation wird damit minimiert, da beispielsweise bei einer Auftragsänderung von einem ersten Kabelbearbeitungsprozess zu einem weiteren Kabelbearbeitungsprozess kein Lernvorgang des neuronalen Netzwerkes notwendig ist und keine Justierschritte an der Kabelbearbeitungsmaschine durch den Operator notwendig sind.

Weiter bevorzugt führt das KI-Module eine semantische Segmentierung des zumindest einen detektierten Bildes durch, um jedem Pixel des detektierten Bildes zumindest einen kabelspezifischen Bildparameters zuzuordnen, sowie den ersten analysierten kabelspezifischen Bildparameter und zumindest den zweiten analysierten kabelspezifischen Bildparameter an das Bildverarbeitungssystem zu übergeben. Eine derartige Bildbearbeitung ist beispielsweise in Liang-Chieh Chen et. al "Encoder-Decoder with Atrous Separable Convolution for Semantic Image Segmentation", Google Inc, 2018, arXiv:1802.02611, offenbart, wobei das detektierte Bild bearbeitet wird. Dabei wird einem Pixel des detektierten Bildes ein Hintergrundsignal als kabelspezifischer Parameter zugeordnet, wenn für dieses Pixel des detektierten Bildes kein Kabelende bzw. Kabel vorhanden ist.

In einer alternativen Ausführungsform ist das Bildverarbeitungssystem so konfiguriert, um eine Segmentierung des zumindest einen detektierten Bildes durchzuführen. Dabei wird das detektierte Bild derart verarbeitet, dass dieses beispielsweise gefiltert bzw. analysiert wird, sodass das analysierte Bild eine höhere Bildqualität, insbesondere in jenen Bereichen, in denen das Kabelende des Kabels erkennbar ist, entsteht und damit ein erster analysierter kabelspezifischer Bildparameter und ein zweiter analysierter kabelspezifischer Bildparameter verbessert bestimmbar ist. Vorteilhaft weist das Bildverarbeitungssystem eine Recheneinheit auf, welche zumindest die zuvor angeführten Analysen bzw. Rechenschritte einfach ausführt.

Alternativ oder ergänzend ist das Bildverarbeitungssystem so konfiguriert, um das zumindest eine detektierte Bild des Kabelendes des Kabels auf Basis des ersten kabelspezifischen Bildparameters und des zweiten kabelspezifischen Bildparameters zumindest in zwei materialspezifische Bereiche zu unterteilen. Ein materialspezifischer Bereich unterscheidet sich von einem weiteren materialspezifischen Bereich darin, dass diese zumindest unterschiedliche Materialien aufweisen. Damit lässt sich das Kabelende des Kabels einfach in zumindest zwei Bereiche aufteilen, sodass das Bildverarbeitungssystem beispielsweise unerwünschte Kabelisolationsreste oder andere Fremdkörper am Kabelende erkennen kann. Weiters lässt sich mit dieser einfachen Unterteilung bei einem Koaxialkabel unerwünschte Schnittdrähte der Kabelschirmung auf dem Dielektrikum einfach erkennen, sodass ein späterer Kurzschluss oder mangelhafte Hochfrequenzverbindungen am verarbeiteten Kabel verhinderbar sind.

Bevorzugt ist das Bildverarbeitungssystem so konfiguriert, um das zumindest eine detektierte Bild des Kabelendes des Kabels auf Basis des ersten analysierten, kabelspezifischen Bildparameters und des zweiten analysierten, kabelspezifischen Bildparameters zumindest in zwei materialspezifische Bereiche zu unterteilen. Damit können die zuvor beschriebenen unerwünschten Kabelisolationsreste oder andere Fremdkörper am Kabelende verbessert erkannt werden, da das detektierte Bild beispielsweise gefiltert wird, um analysierte kabelspezifische Bildparameter zu erhalten. In weitere Folge können somit spätere Unterbrechungen im Kabelbearbeitungsprozess verhindert werden und gleichzeitig die Endprodukte mit höherer Qualität, wie beispielsweise die Lebensdauer des verarbeiteten Kabels, hergestellt werden.

Vorzugsweise umfasst der erste materialspezifische Bereich zumindest den elektrischen Leiter des Kabels und der zweite materialspezifische Bereich zumindest die Kabelisolierung. Diese materialspezifischen Bereiche können bezüglich deren Flächengrösse und deren Randstruktur, auch Kontur bezeichnet, vom Bildverarbeitungssystem analysiert werden, um beispielsweise Grenzbereiche zwischen dem ersten materialspezifischen Bereich und dem zweiten materialspezifischen Bereich zu analysieren. Beispielsweise ist das Bildverarbeitungssystem so konfiguriert, um die Flächengrösse, den Flächenumfang bzw. den Flächendurchmesser oder die Randstrukturen der jeweiligen materialspezifischen Bereiche zu erkennen bzw. zu vermessen und/oder zu berechnen. Beispielsweise kann es vorkommen, dass beim Prozessarbeitsschritt des Abisolierens der Kabelisolierung, und der darin beinhaltente Abzugs-Prozessarbeitsschritt, eine Kabellitze des elektrischen Leiters eingeschnitten wird und nach dem Abziehen der Kabelisolierung eine einzelne Kabellitze gegenüber dem elektrischen Leiter vorsteht bzw. absteht. Mit der Erkennung der zuvor genannten materialspezifischen Bereiche durch das KI-Moduls und/oder durch das Bildverarbeitungssystem ist nun im analysierten Bild erkennbar, ob es sich dabei um einen vorstehende Kabellitze handelt oder um ein Stück der Kabelisolierung handelt. Ein Stück der Kabelisolierung an der Spitze des elektrischen Leiters kann gegebenenfalls für die weiteren Prozessarbeitsschritte beim Anbringen eines Kabelanschlusselements toleriert werden. Bei bekannten vergleichbaren Methoden, wie beispielsweise einer Schattenbildmethode, ist es im detektierten Bild nicht möglich das Material des vorstehenden Objekts von dem Material der übrigen Objekte zu unterscheiden, sodass falsche Fehlermeldungen auftreten, die zu einem Verwerfen eines brauchbaren Kabels führen.

Bevorzugterweise ist eine Datenbank vorhanden, welche mit dem Bildverarbeitungssystem verbunden ist, wobei die Datenbank zumindest eine Speichereinheit aufweist und in der zumindest einen Speichereinheit Referenzbilder zu unterschiedlichen Kabelenden hinterlegt sind. In der Speichereinheit der Datenbank sind zumindest ein, vorteilhaft mehrere, Referenzbilder zu unterschiedlichen Kabeltypen abgespeichert, welche in der Kabelbearbeitungsstation bearbeitbar sind, und von dem Bildverarbeitungssystem abrufbar sind. Zu Beginn eines Kabelbearbeitungsprozesses wird typischerweise ein Auftrag mit Auftragsdaten zu dem zu bearbeitenden Kabel an die Steuereinrichtung der Kabelbearbeitungsstation übermittelt, welcher auf die Datenbank und deren Inhalt zugreifen kann. Das Bildverarbeitungssystem vergleicht die detektierten bzw. analysierten Bilder mit den Referenzbildern aus der Datenbank und/oder mit den Informationen zum vorliegenden Auftrag. Die Referenzbilder weisen beispielsweise segmentierte Bereiche auf, welche somit einfach mit dem detektierten bzw. analysierten Bild vergleichbar sind. Damit ist der Kabelbearbeitungsprozess ohne Operator durchführbar. Die Auftragsdaten zu dem zu bearbeitenden Kabeln bzw. Kabeltypen umfassen u.a. Steuerdatensätzen und/oder steuerungsspezifischen Parametern zum Steuern des ersten Werkzeugs sowie entsprechende Steuertoleranzen sowie kabelspezifische Bildparameter und/oder materialspezifische Bereiche samt Toleranzwerte, sodass jene bearbeiteten Kabeln, welche sich innerhalb der jeweiligen Toleranzen befinden, weiter verarbeitbar sind. Somit ist der Ausschuss an fehlerhaften Kabelenden verringerbar und die Produktivität an der Kabelbearbeitungsstation erhöht ist.

Alternativ oder ergänzend ist eine Datenbank vorhanden, welche mit dem Bildverarbeitungssystem verbunden ist, wobei die Datenbank zumindest eine Speichereinheit aufweist und in der zumindest einen Speichereinheit Referenzkonturen zu unterschiedlichen Kabelenden und/oder Dichtungselementen und/oder Kabelanschlusselementen hinterlegt sind. In der Speichereinheit der Datenbank sind zumindest ein, vorteilhaft mehrere, Referenzkonturen zu unterschiedlichen Kabeltypen abgespeichert, welche in der Kabelbearbeitungsstation bearbeitbar sind, und von dem Bildverarbeitungssystem abrufbar sind. Zu Beginn eines Kabelbearbeitungsprozesses wird typischerweise ein Auftrag mit Auftragsdaten zu dem zu bearbeitenden Kabel an die Steuereinrichtung der Kabelbearbeitungsstation übermittelt, welcher auf die Datenbank und deren Inhalt zugreifen kann. Das Bildverarbeitungssystem vergleicht die detektierten bzw. analysierten Bilder mit den Referenzkonturen aus der Datenbank und/oder mit den Informationen zum vorliegenden Auftrag. Die Auftragsdaten zu dem zu bearbeitenden Kabeln bzw. Kabeltypen umfassen u.a. Steuerdatensätzen und/oder steuerungsspezifischen Parametern zum Steuern des ersten Werkzeugs sowie entsprechende Steuertoleranzen sowie kabelspezifische Bildparameter und/oder materialspezifische Bereiche samt Toleranzwerte, sodass jene bearbeiteten Kabeln, welche sich innerhalb der jeweiligen Toleranzen befinden, weiter verarbeitbar sind. Somit ist der Ausschuss an fehlerhaften Kabelenden verringerbar und die Produktivität an der Kabelbearbeitungsstation erhöht ist.

Vorteilhaft sind die Referenzkonturen einzeln als Konturvektor abgespeichert. Der Konturvektor ist dem detektierten bzw. analysierten Bild einfach zuzuordnen, wobei die Datenmenge eines Konturvektors gegenüber der Datenmenge eines Referenzbilds gering ist, sodass die Verarbeitung der Daten beschleunigt wird.

Vorteilhaft sind in der Datenbank steuerungsspezifische Parameter und/oder Steuerdatensätze gespeichert, mit welchen das zumindest eine erste Werkzeug steuerbar bzw. regelbar ist. Die steuerungsspezifischen Parameter und/oder Steuerdatensätze können an die Steuereinrichtung übertragen werden, sodass diese den Antrieb des zumindest einen ersten Werkzeugs einfach steuern.

Alternativ oder ergänzend ist die Datenbank mit dem KI-Modul verbunden, wobei in der zumindest einen Speichereinheit der Datenbank Referenzbilder zu unterschiedlichen Kabelenden hinterlegt sind. Das Bildverarbeitungssystem vergleicht die detektierten bzw. analysierten Bilder mit den Referenzbildern aus der Datenbank, ohne einen Operator zu benötigen.

Alternativ oder ergänzend ist die Datenbank mit dem KI-Modul verbunden, wobei in der zumindest einen Speichereinheit der Datenbank Referenzkonturen zu unterschiedlichen Kabelenden hinterlegt sind. Das Bildverarbeitungssystem vergleicht die detektierten bzw. analysierten Bilder mit den Referenzkonturen aus der Datenbank, ohne einen Operator zu benötigen. Die Referenzkonturen können, wie zuvor angeführt, als Konturvektor in der Datenbank hinterlegt werden.

Alternativ oder ergänzend ist zumindest ein Sollwert für zumindest einen kabelspezifischen Bildparameter in der Speichereinheit der Datenbank hinterlegt. Diese Sollwerte können Sollwerte zur Abisolierlänge des Kabelendes sein und/oder die Breite bzw. Dicke des elektrischen Leiters sein und umfassen typischerweise Toleranzwerte zu den jeweiligen Sollwerten zum jeweiligen Kabeltyp. Weiters umfassen diese Sollwerte Symmetriewerte bzw. Verhältniswerte, wie beispielsweise ein Verhältnis von der Abisolierlänge zur Dicke des elektrischen Leiters bzw. zu dem Kabeltyp, welcher sich gerade im Kabelverarbeitungsprozess befindet.

Alternativ oder ergänzend ist zumindest ein Sollwert für zumindest einen materialspezifischen Bereich in der Speichereinheit der Datenbank hinterlegt. Diese Sollwerte können Sollwerte zur Flächengrösse, zum Flächenumfang bzw. zum Flächendurchmesser oder zur Randstruktur des jeweiligen materialspezifischen Bereichs umfassen, oder eine Kombination der zuvor genannten Werte umfassen und weisen entsprechende Toleranzwerte auf. Beispielsweise kann das Bildverarbeitungssystem diese Sollwerte einzeln oder gebündelt abrufen und mit dem erkannten materialspezifischen Bereich vergleichen.

Vorteilhaft ist die Recheneinheit konfiguriert, um aus einem Vergleich des zumindest einen Sollwert und einen vermessenen kabelspezifischen Bildparameter zumindest einen Abweichungswert zu erstellen, welche einfach weiter verarbeitbar sind.

Vorzugsweise ist das Bildverarbeitungssystem so konfiguriert, um zumindest den ersten kabelspezifischen Bildparameter und/oder zumindest den ersten analysierten kabelspezifischen Bildparameter aus dem detektierten Bild des Kabelendes des Kabels mithilfe eines Bildmessverfahrens zu erfassen. Das Bildmessverfahren umfasst zumindest einen Bildvermessungsalgorithmus, welcher beispielsweise in S. and Abe, K., "Topological Structural Analysis of Digitized Binary Images by Border Following", CVGIP 30 1, pp 32-46 (1985) offenbart ist. Damit lassen sich die Randstrukturen der materialspezifischen Bereiche berechnen. Die Randstrukturen können in Konturpunkte unterteilt werden und anschliessend anhand eines Richtungsvektors mathematisch gefiltert werden, um nur die Messpunkte der Schnittkanten zu erhalten. In einem weiteren Schritt kann der Median, das 10%-Quantil und das 90%-Quantil der Messpunkte in der Längsachse des Kabels statistisch ausgewertet werden. Aus der statistischen Streuung der Messpunkte an der Schnittkante in Längsachse des Kabels wird ein Attribut der Schnittqualität im Kabelbearbeitungsprozess ableitbar. Weiters kann ein kabelspezifischer Parameter beispielsweise eine Abisolierlänge am Kabelende umfassen und somit ein Längenmass sein.

Der Bildvermessungsalgorithmus ist alternativ oder ergänzend so konfiguriert, um das detektierte Bild in einem ersten Schritt geometrisch zu vermessen, um den ersten kabelspezifischen Bildparameter und den zweiten kabelspezifische Bildparameter zu bestimmen. Dabei wird das detektierte Bild derart verarbeitet, dass in einem ersten Schritt die Abisolierlänge am Kabelende als erster kabelspezifischen Bildparameter bestimmt wird, indem die Länge zwischen dem Ende des elektrischen Leiters bis zur Kabelisolierung am detektierten Bild vermessbar ist. Gleichzeitig wird der zweite kabelspezifische Bildparameter bestimmt, indem der Grenzbereich zur bzw. der Anfang der Kabelisolierung erkennbar ist. Anhand der Ausgestaltung des erkannten Grenzbereichs zur Kabelisolierung kann beispielsweise die Position des Kabels in der Kabelbearbeitungsstation bestimmt werden und/oder die korrekte Abisolierung der Kabelisolierung von dem Kabelende und/oder die korrekte Positionierung eines Dichtungselements am Kabelende bestimmt bzw. überprüft werden.

Bevorzugterweise ist der erste kabelspezifische Bildparameter und/oder der zweite kabelspezifische Bildparameter zumindest aus der Gruppe der Farbe oder Struktur oder Form des elektrischen Leiters und/oder der Kabelisolierung und/oder einer Kabelschirmung und/oder eines Dichtungselements. Damit lassen sich unterschiedliche Farben und/oder unterschiedliche Strukturen und/oder unterschiedliche Formen am zumindest einen detektierten Bild erkennen.

Die Farberkennung ermöglicht beispielsweise eine rasche Unterscheidung zwischen dem elektrischen Leiter und der Kabelisolierung. Weiters kann mit der Farberkennung das Material des elektrischen Leiters erkannt werden und beispielsweise zwischen elektrischen Leitern aus Kupfer oder Aluminium unterschieden werden. Darüber hinaus können auch Beschichtungen, wie beispielsweise Verzinnungen an dem elektrischen Leiter bestimmt werden. Wird beispielsweise mit dem ersten kabelspezifischen Bildparameter die Farbe des Dichtungselements erkannt und mithilfe des zweiten kabelspezifischen Bildparameter die Randstruktur des Dichtungselements erkannt bzw. überprüft, können in weitere Folge Unterbrechungen im Kabelbearbeitungsprozess verhindert werden und gleichzeitig der Verbrauch bzw. Ausschuss von Kabelanschlusselementen und/oder Kabelmaterial unterbunden werden.

Die Strukturerkennung ermöglicht beispielsweise eine Unterscheidung zwischen einem elektrischen Leiter, welcher aus einzelnen Kabellitzen besteht und einem eindrähtigen elektrischen Leiter. Darüber hinaus erfasst die Strukturerkennung unterschiedliche Materialen der Kabelisolierung. Weiters ermöglicht die Strukturerkennung das Feststellen eines fehlerfreien Kabels und/oder Dichtungselements und/oder Kabelanschlusselements. Beispielsweise kann ein fehlerhaftes Dichtungselement, welches dadurch fehlerhaft am Kabelende positioniert wurde, erkannt werden. Insbesondere kann das fehlerhafte Dichtungselement vor dem Positionieren am Kabelende erkannt werden, sodass die Weiterbearbeitung dieses Kabels verhindert wird. Damit kann ein möglicher Ausschuss zeitnahe festgestellt werden, sodass die weiteren Kabelbearbeitungsschritte mit einem fehlerhaften Dichtungselement verhinderbar sind.

Die Formerkennung ermöglicht beispielsweise eine Unterscheidung zwischen einer unsauberen bzw. nachteilig geschnittenen Kabelisolierung nach dem Abisolieren der Ummantelung am Kabelende. Weiters ermöglicht die Formerkennung eine Unterscheidung zwischen einem unverdrillten Kabelende und einem verdrillten Kabelende sowie beispielweise ein Abstehen einer oder mehrerer Leiterdrähten von der gewünschten Orientierung des Kabelendes des Kabels. Beispielsweise kann es vorkommen, dass beim Aufbringen eines Dichtungselements auf das Kabelende zumindest ein Leiterdraht derart am Kabelende positioniert wird, dass ein undichter Bereich am Kabelende entsteht, welcher zu einem späteren Zeitpunkt Korrosionsschäden am verarbeiteten Kabel verursacht. Das Bildverarbeitungssystem und/oder das KI-Modul erkennt, wie zuvor dargelegt, selbstständig die unterschiedlichen materialspezifischen Bereiche, welche zum elektrischen Leiter, zur Kabelisolierung und zum Dichtungselement gehören und verhindert in weiterer Folge die Produktion fehlerhafter Kabel. Die zuvor genannten Erkennungen sind jeweils einzeln oder in diversen Kombinationen während und nach der Bearbeitung des Kabelendes des Kabels mit dem ersten Werkzeug durchführbar.

Vorzugsweise ist das KI-Modul so konfiguriert, um aus dem zumindest einen detektierten Bild zumindest einen weiteren kabelspezifischen Bildparameter zu erfassen. Damit basiert der zumindest eine steuerungsspezifische Parameter auf zumindest einer weiteren Information zum Kabelende des Kabels oder auch auf einen Prozessparameter im Kabelbearbeitungsprozess. Dieser Prozessparameter kann beispielsweise eine Einlegeposition des Kabelendes in das erste Werkzeug umfassen. Der weitere kabelspezifische Bildparameter wird, wie die zuvor beschriebenen Bildparameter, erkannt. Alternativ oder ergänzend ist das Bildverarbeitungssystem so konfiguriert, um aus dem zumindest einen detektierten Bild den zumindest einen weiteren kabelspezifischen Bildparameter zu erfassen.

Insbesondere ist dem weiteren kabelspezifischen Bildparameter ein Kabelanschlusselement für das Kabelende des Kabels zuzuordnen. Beispielsweise kann die Einlegeposition des Kabelendes innerhalb des Kabelanschlusselements durch ein Auswerten der Längen des materialspezifischen Bereichs des Kabelendes sowie des materialspezifischen Bereichs des Kabelanschlusselements zueinander berechnet werden. Insbesondere kann mithilfe des zuvor beschriebenen Bildvermessungsalgorithmus ausgerechnet werden, wie sich der Bereich des elektrischen Leiters und der Bereich der Kabelisolierung aufteilen. Ebenso kann gemessen werden, wie weit die Spitze des elektrischen Leiters die vorderste Befestigungszone am Kabelanschlusselement überragt, indem die Länge des vordersten materialspezifischen Bereichs des elektrischen Leiters berechnet wird.

Bevorzugterweise ist die Steuerungseinrichtung ausgebildet, einen Prozessarbeitsschritt des zumindest einen ersten Werkzeugs auf Basis des zumindest einen steuerungsspezifischen Parameters anzuhalten und/oder zu verhindern. Durch das Aussortieren von fehlerhaft verarbeiteten Kabelenden, werden keine fehlerhaften Kabel produziert. Die Prozesssicherheit wird damit erhöht und Folgeschäden an den Geräten mit den verarbeiteten Kabeln werden unterbunden.

Das erfindungsgemässe computerimplementierte Verfahren zum automatischen Bestimmen und Erzeugen von Steuerdatensätzen und/oder steuerungsspezifischen Parametern zum Steuern zumindest einer Kabelbearbeitungsstation, welche zumindest ein Kabelende eines Kabels bearbeitet, wobei zumindest ein Bild des zumindest einen Kabelendes des Kabels mit einer ersten bildgebende Sensoreinrichtung detektiert wird, und automatisch zumindest ein Steuerdatensatz und/oder ein steuerungsspezifischer Parameter erzeugt und gespeichert wird, und ein Bildverarbeitungssystem vorhanden ist, welche das zumindest eine detektierte Bild empfängt und erkennt einen ersten kabelspezifischen Bildparameter sowie zumindest einen zweiten kabelspezifischen Bildparameter, und erstellt auf Basis des ersten kabelspezifischen Bildparameters und des zweiten kabelspezifischen Bildparameters den zumindest einen Steuerdatensatz und/oder den zumindest einen steuerungsspezifischen Parameter.

Der zumindest eine steuerungsspezifische Parameter und/oder zumindest eine Steuerdatensatz wird auf Basis einer Kombination des zumindest einen ersten kabelspezifischen Bildparameters und den zweiten kabelspezifischen Bildparameters erstellt. Die Kombination des zumindest einen ersten kabelspezifischen Bildparameters und des zweiten kabelspezifischen Bildparameters führt in weiterer Folge im Bildverarbeitungssystem zu einem spezifischen Kabeltyp, welcher insbesondere mit der hier vorliegend beschriebenen Kabelbearbeitungsstation bearbeitet wird oder zur Bearbeitung in der Kabelbearbeitungsstation vorgesehen ist. Das erste Werkzeug wird anschliessend auf Basis des zumindest einen steuerungsspezifischen Parameters derart gesteuert bzw. geregelt, sodass eine rasche Nachführen des Kabelbearbeitungsprozesses an der Kabelbearbeitungsstation möglich ist.

Der Steuerdatensatz und/oder der steuerungsspezifische Parameter steuern bzw. regeln zumindest die Bewegung bzw. die Arbeitsaktivität zumindest des ersten Werkzeugs. Das erste Werkzeug kann beispielsweise dabei von einem Ausgangszustand zu einem Endzustand bewegbar sein und/oder aktiviert bzw. deaktiviert werden. Diese Bewegungen umfassen typischerweise Steuertoleranzen.

Vorzugsweise wird zumindest ein steuerungsspezifischer Parameter an die Steuereinrichtung übermittelt, womit zumindest das erste Werkzeug unmittelbar und automatisch steuerbar bzw. regelbar wird.

Bevorzugt wird zumindest ein Steuerdatensatz an eine Speichereinheit übermittelt. Damit kann dieser zumindest eine Steuerdatensatz in der Speichereinheit einfach gespeichert werden und längerfristig hinterlegt werden, um zu einem späteren Zeitpunkt darauf zurückzugreifen.

Bevorzugterweise wird aus dem zumindest einen detektierten Bild mithilfe eines KI-Moduls der erste kabelspezifische Bildparameter sowie zumindest der zweite kabelspezifische Bildparameter erfasst, wobei das KI-Modul das zumindest eine detektierte Bild analysiert und bearbeitet. Das KI-Modul arbeitet und erkennt flexibel und automatisch unterschiedliche Kabeltypen und auch unterschiedliche Kabelanschlusselemente.

Alternativ oder ergänzend wird aus dem zumindest einen detektierten Bild mithilfe des Bildverarbeitungssystem der erste kabelspezifische Bildparameter sowie zumindest der zweite kabelspezifische Bildparameter erfasst, wobei das Bildverarbeitungssystem das zumindest eine detektierte Bild analysiert und verarbeitet. Somit lassen sich einfach und schnell kabelspezifische Parameter für den weiteren Prozess bereitstellen.

Bevorzugt wird eine semantische Segmentierung des zumindest einen detektierten Bildes durchgeführt und jedem Pixel des detektierten Bildes zumindest einen kabelspezifischen Bildparameter zugeordnet. Dabei wird das detektierte Bild beispielsweise gefiltert bzw. analysiert, sodass das analysierte Bild eine höhere Bildqualität, insbesondere in jenen Bereichen, in denen das Kabelende des Kabels erkennbar ist, entsteht und damit ein erster analysierter kabelspezifischer Bildparameter und ein zweiter analysierter kabelspezifischer Bildparameter bestimmt wird.

Vorteilhaft wird das KI-Modul mithilfe des zumindest einem kabelspezifischen Bildparameter trainiert, wobei dieses ein neuronales Netzwerk umfasst. Das neuronale Netzwerk ist mit kabelspezifischen Bildparametern trainierbar, um, je nach Qualität der Trainingsbilder bzw. Referenzbilder, verbesserte zukünftige Steuerdatensätze und/oder steuerungsspezifische Parameter zu erzeugen und um eine verbesserte Prüfung der Prozessarbeitsschritte in der Kabelbearbeitungsstation durchzuführen. Weiters ermöglicht das KI-Modul ein weitgehend von einem Operator unabhängiges Durchführen des Kabelbearbeitungsprozesses bzw. der darin vorkommenden mehreren Prozessarbeitsschritte, da das neuronale Netzwerk dessen Aufgaben übernimmt. Die Stillstandzeit an der Kabelbearbeitungsstation wird minimiert, da beispielsweise bei einer Auftragsänderung von einem ersten Kabelbearbeitungsprozess zu einem weiteren Kabelbearbeitungsprozess kein Lernvorgang des neuronalen Netzwerkes zwingend ist und keine Justierschritte an der Kabelbearbeitungsmaschine durch den Operator notwendig sind.

Vorzugsweise wird das zumindest eine detektierte Bild des Kabelendes des Kabels auf Basis des ersten kabelspezifischen Bildparameters und des zweiten kabelspezifischen Bildparameters zumindest in zwei materialspezifische Bereiche unterteilt. Ein materialspezifischer Bereich unterscheidet sich von einem weiteren materialspezifischen Bereich darin, dass diese zumindest unterschiedliche Materialien aufweisen. Damit lässt sich das Kabelende des Kabels einfach in zumindest zwei Bereiche aufteilen, sodass das Bildverarbeitungssystem beispielsweise unerwünschte Kabelisolationsreste oder andere Fremdkörper am Kabelende erkennen kann. Weiters lassen sich mit dieser einfachen Unterteilung bei einem Koaxialkabel unerwünschte Schnittdrähte des Kabelschirm auf dem Dielektrikum einfach erkennen, sodass ein späterer Kurzschluss oder mangelnde Hochfrequenzverbindungen am verarbeiteten Kabelende verhinderbar sind.

Bevorzugt wird das zumindest eine detektierte Bild des Kabelendes des Kabels auf Basis des ersten analysierten kabelspezifischen Bildparameters und des zweiten analysierten kabelspezifischen Bildparameters zumindest in zwei materialspezifische Bereiche unterteilt. Damit können die zuvor beschriebenen unerwünschten Kabelisolationsreste oder andere Fremdkörper am Kabelende verbessert erkannt werden, da das detektierte Bild beispielsweise gefiltert wird, um analysierte kabelspezifische Bildparameter zu erhalten. In weitere Folge können somit spätere Unterbrechungen im Kabelbearbeitungsprozess verhindert werden und gleichzeitig die Endprodukte mit höherer Qualität, wie beispielsweise die Lebensdauer des verarbeiteten Kabels, hergestellt werden.

Bevorzugt wird der erste materialspezifische Bereich dem elektrischen Leiter des Kabels zugeordnet und der zweite materialspezifische Bereich der Kabelisolierung zugeordnet. Anschliessend werden insbesondere die materialspezifischen Bereiche bezüglich deren Flächengrösse und/oder Bereichslänge und/oder deren Randstruktur vermessen bzw. analysiert, um beispielsweise einfach Grenzbereiche zwischen dem ersten materialspezifischen Bereich und dem zweiten materialspezifischen Bereich zu erkennen. Die Position des ersten Werkzeugs und der damit verbundene steuerungsspezifische Parameter wird Anhand der Grösse (Länge mal Breite) des materialspezifischen Bereichs berechnet. Das Messen der Bereichslänge kann verwendet werden, um die Positionsveränderung des als erstes Werkzeug bezeichnete Abisoliermessers zu bestimmen. Dieser Prozessarbeitsschritt wird verbessert, da die materialspezifischen Bereiche aus mehreren Messpunkten bestehen, sodass es nicht nur Messpunkte gibt, bei denen die Kabelisolierung den elektrischen Leiter überragt, sondern auch Messpunkte am detektierten bzw. analysierten Bild, bei denen ein Wechsel von dem ersten materialspezifischen Bereich zum zweiten materialspezifischen Bereich erkennt wird.

Beim Messen wird ein Bildvermessungsalgorithmus verwendet, welcher das Bild geometrisch vermisst, wobei einer der Bildvermessungsalgorithmus beispielsweise in S. and Abe, K., "Topological Structural Analysis of Digitized Binary Images by Border Following", CVGIP 30 1, pp 32-46 (1985) offenbart ist. Damit lassen sich eine Vielzahl von Messpunkten vermessen und anschliessend die Randstrukturen der materialspezifischen Bereiche berechnen. Die Randstrukturen können in Konturpunkte unterteilt werden und anschliessend anhand eines Richtungsvektors mathematisch gefiltert werden, um nur die Messpunkte der Schnittkanten zu erhalten. In einem weiteren Schritt wird der Median, das 10%-Quantil und das 90%-Quantil der Messpunkte in der Längsachse des Kabels statistisch ausgewertet. Aus der statistischen Streuung der Messpunkte an der Schnittkante in Längsachse des Kabels wird ein Attribut der Schnittqualität im Kabelbearbeitungsprozess abgeleitet. Damit kann der optimale Zeitpunkt für den Austausch der Abisoliermesser festgestellt werden.

Bevorzugterweise wird der zumindest eine kabelspezifische Bildparameter mit einem Sollwert für diesen kabelspezifischen Bildparameter verglichen und auf Basis dieses Vergleichs zumindest ein steuerungsspezifischer Parameter erstellt. Diese Sollwerte können Sollwerte zur Abisolierlänge des Kabelendes sein und/oder die Breite bzw. Dicke des elektrischen Leiters sein und umfassen typischerweise Toleranzwerte zu den jeweiligen Sollwerten je Kabeltyp. Weiters umfassen diese Sollwerte Symmetriewerte bzw. Verhältniswerte, wie beispielsweise ein Verhältnis von der Abisolierlänge zur Dicke des elektrischen Leiters bzw. zu dem Kabeltyp, welcher sich gerade im Kabelverarbeitungsprozess befindet. Die daraus erstellten steuerungsspezifischen Parameter können beispielsweise die Positionen des Abisoliermessers beim Einschneiden in die Kabelisolierung umfassen und/oder die Abzugslänge beim Abisolieren der Kabelisolation vom Kabelende umfassen.

Alternativ oder ergänzend wird der zumindest eine kabelspezifische Bildparameter mit einem Sollwert für diesen kabelspezifischen Bildparameter verglichen und auf Basis dieses Vergleichs zumindest ein Steuerdatensatz erstellt. Ein Steuersatz umfasst typischerweise mehrere steuerungsspezifische Parameter zum Steuern eines oder mehrerer Werkzeuge der Kabelbearbeitungsstation. Ein einziger Vergleich des zumindest einen kabelspezifischen Bildparameters mit einem entsprechenden Sollwert ermöglicht einen Rückschluss auf den Kabeltyp in der Kabelbearbeitungsstation, sodass diese automatisch steuerbar wird und ein Kabelbearbeitungsprozess durchgeführt wird.

Alternativ oder ergänzend wird der zumindest eine materialspezifische Bereich mit einem Sollwert für diesen materialspezifischen Bereich verglichen und auf Basis dieses Vergleichs zumindest ein Steuerdatensatz und/oder ein steuerungsspezifischer Parameter erstellt. Ein Steuersatz umfasst typischerweise mehrere steuerungsspezifische Parameter zum Steuern eines oder mehrerer Werkzeuge der Kabelbearbeitungsstation. Ein einziger Vergleich des zumindest einen materialspezifischen Bereichs mit einem entsprechenden Sollwert ermöglicht einen Rückschluss auf die Art und Dimension des Materials des Kabels und in weiterer Folge des Kabeltyps in der Kabelbearbeitungsstation, sodass diese automatisch steuerbar wird und ein Kabelbearbeitungsprozess durchgeführt wird.

Bevorzugt wird nach dem Vergleich des kabelspezifischen Bildparameters mit dem entsprechenden Sollwert ein Mittelwert im Bildverarbeitungssystem berechnet, welcher mit dem jeweiligen Toleranzwert bzw. Sollwert verglichen wird und in weiterer Folge ein nachgeführter steuerungsspezifische Parameter erstellt wird. Die Mittelwertberechnung ermöglicht das Filtern eines fehlerhaften Wertes, wie beispielsweise einer ausserordentlichen Abweichung des Abweichungswertes.

Alternativ oder ergänzend wird nach dem Vergleich des materialspezifischen Bereichs mit dem entsprechenden Sollwert, ein Mittelwert im Bildverarbeitungssystem berechnet, welcher mit dem jeweiligen Toleranzwerts bzw. Sollwerts verglichen wird und in weiterer Folge ein nachgeführter steuerungsspezifische Parameter erstellt wird.

Bevorzugt erfolgt im Bildverarbeitungssystem ein Vergleich des vermessenen kabelspezifischen Bildparameters mit dem entsprechenden Sollwert, wobei aus dem Vergleich ein Abweichungswert erstellt wird. Damit wird der weiterführende Kabelbearbeitungsprozess verbessert.

Vorteilhaft wird bei einer Abweichung der Vergleichsparameter, das im Kabelbearbeitungsprozess befindliche Kabel entsorgt, sodass keine fehlerhaften Kabel im Kabelbearbeitungsprozess verbleiben.

Die erfindungsgemässe Kabelbearbeitungsmaschine mit zumindest zwei Kabelbearbeitungsstationen, wobei zumindest eine Kabelbearbeitungsstation wie hier vorliegend beschrieben ausgebildet ist und mit der ein wie hier vorliegen beschriebenes computerimplementiertes Verfahren ausführbar ist, weist ein Bildverarbeitungssystem auf. Das Bildverarbeitungssystem ist mit einer Zentralsteuereinrichtung zum Austausch von steuerungsspezifischen Parametern und/oder Steuerdatensätzen verbunden. Das Bildverarbeitungssystem ist so konfiguriert, um auf Basis des ersten kabelspezifischen Bildparameter und des zweiten kabelspezifischen Bildparameter zumindest einen steuerungsspezifischen Parametern und/oder einen Steuerdatensatz zu erstellen und diese an die Zentralsteuereinrichtung zum Steuern zumindest eines der Werkzeuge zumindest einer der beiden Kabelbearbeitungsstationen zu übertragen. Damit werden nicht nur einzelne Kabelbearbeitungsstationen vollautomatisch steuerbar. Die steuerungsspezifischen Parameter und/oder einen Steuerdatensatz werden anstatt an die einzelnen Steuereinrichtungen der Kabelbearbeitungsstationen, an die Zentralsteuereinrichtung weitergeleitet. Damit weist die Kabelbearbeitungsmaschine eine hohe Kabelbearbeitungsprozesssicherheit auf, ohne dass ein Operator an die Kabelbearbeitungsmaschine abgestellt werden muss.

Bevorzugterweise ist die erste bildgebende Sensoreinrichtung ausgebildet, das zumindest eine Bild des Kabelendes des Kabels zu detektieren, wobei das Kabelende des Kabels im von der Kabelbearbeitungsstation unbearbeiteten Zustand vorliegt. Damit lässt sich anhand des zumindest einen detektierten Bildes und insbesondere mit den wie zuvor beschriebenen Ausführungsformen der Kabelbearbeitungsstation, zumindest ein materialspezifischer Bereich bestimmen, mithilfe welchem man beispielsweise den Kabeltyp des Kabels bestimmen kann. Weiters lässt sich eine erste Prüfung des unbearbeiteten Kabels durchführen, sodass beschädigte Kabelenden frühzeitig aussortierbar sind.

Vorzugsweise ist die erste bildgebende Sensoreinrichtung ausgebildet, ein zweites Bild des Kabelendes des Kabels zu detektieren, wobei das Kabelende des Kabels im von zumindest einer Kabelbearbeitungsstation bearbeiteten Zustand vorliegt. Damit lässt sich frühzeitig ein erster steuerungsspezifischer Parameter zum Steuern des ersten Werkzeugs erstellen, wobei dieser basierend auf die hier vorliegend beschriebenen Ausführungsformen der Kabelbearbeitungsstation gestützt ist.

Vorteilhaft ist die erste bildgebende Sensoreinrichtung ausgebildet, um an jeder vorhandenen Kabelbearbeitungsstation ein separates Bild des Kabelendes des Kabels zu detektieren, wobei das Kabelende des Kabels im von der jeweiligen Kabelbearbeitungsstation bearbeiteten Zustand vorliegt. Damit lässt sich ein gesamter Kabelbearbeitungsprozess mit mehreren Kabelbearbeitungsstationen einzeln rasch nachführen, nachdem Abweichungen von einem Ideal-Kabelbearbeitungsprozess festgestellt wurden. Gleichzeitig ist eine hohe Kabelbearbeitungsprozesssicherheit gewährleistet.

Ein erfindungsgemässes Computerprogrammprodukt, das direkt in den internen Speicher der Zentralsteuereinrichtung einer hier vorliegend beschriebenen Kabelbearbeitungsmaschine und/oder einer Steuerungseinrichtung einer hier vorliegend beschriebenen Kabelbearbeitungsstation geladen werden kann und steuerungsspezifische Parameter und/oder Steuerdatensätze umfasst, mit denen die Schritte gemäss einem der zuvor genannten Verfahren ausgeführt werden, wenn das Computerprogrammprodukt auf der erfindungsgemässen Kabelbearbeitungsstation oder Kabelbearbeitungsmaschine läuft.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Kabelbearbeitungsstation in einer schematischen Darstellung,
- Fig. 2: eine Darstellung eines mit der Sensoreinrichtung detektierten Bildes eines ersten Kabelendes des Kabels,
- Fig. 3: eine Darstellung eines segmentierten Bildes gemäss dem Bild in Fig. 2,
- Fig. 4: eine Darstellung eines segmentierten Bildes gemäss dem Bild in Fig. 3 mit einem ersten Kabelanschlusselement,
- Fig. 5: eine Darstellung eines segmentierten Bildes eines weiteren Kabelendes eines weiteren Kabels mit einem weiteren Kabelanschlusselement,
- Fig. 6: ein erstes Flussdiagramm, welches ein Verfahren zum Steuern der Kabelbearbeitungsstation offenbart,
- Fig. 7: eine erfindungsgemässe Kabelbearbeitungsmaschine mit einer Kabelbearbeitungsstation gemäss Fig. 1 in einer perspektivischen Darstellung,
- Fig. 8: die Kabelbearbeitungsmaschine gemäss Fig. 7, in einer schematischen Darstellung, und
- Fig. 9: ein weiteres Flussdiagramm, welches ein Verfahren zum Steuern der Kabelbearbeitungsmaschine gemäss Fig. 7 offenbart.

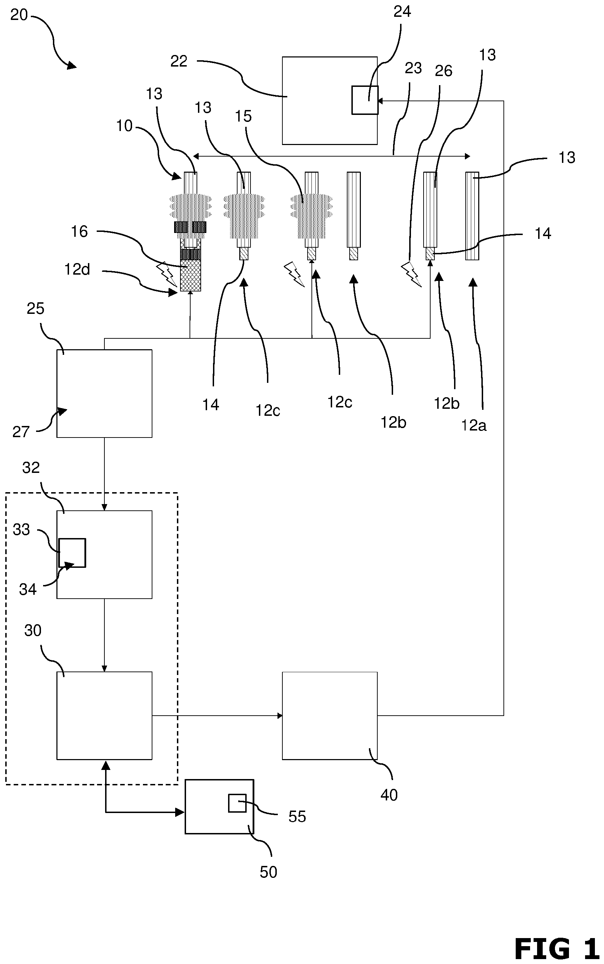

Fig. 1 zeigt eine Kabelbearbeitungsstation 20 zum Bearbeiten eines Kabelendes 12 eines elektrischen Kabels 10, welche zumindest ein erstes Werkzeug 22 zum Bearbeiten des Kabels 10 und eine Steuereinrichtung 40 zum Steuern des zumindest ersten Werkzeugs 22 umfasst. Das gezeigte Kabel 10 ist mit unterschiedlichen Kabelenden 12a-12d dargestellt, welche in unterschiedlichen Prozessarbeitsschritten an der Kabelbearbeitungsstation 20 mit zumindest dem ersten Werkzeug 22 bearbeitbar sind. Das Kabel 10 mit dem Kabelende 12a ist unverarbeitet und weist eine Kabelisolierung 13 auf, die den elektrischen Leiter 14 abschnittsweise umschliesst und welche an der Stirnseite des Kabels 10 austritt. Dasselbe Kabel 10 weist nach einem weiteren Prozessarbeitsschritt das Kabelende 12b auf, wobei der elektrische Leiter 14 nach dem Abisolieren frei liegt und die Kabelisolierung 13 im Bereich des Kabelendes 12b entfernt ist. Dasselbe Kabel 10 weist nach einem weiteren Prozessarbeitsschritt das Kabelende 12c auf, wobei ein Dichtungselement 15 im Bereich des Kabelendes 12c angeordnet ist. Dasselbe Kabel 10 weist nach einem weiteren Prozessarbeitsschritt das Kabelende 12d auf, wobei ein Kabelanschlusselement 16 im Bereich des Kabelendes 12d angeordnet ist und gecrimpt ist. Das erste Werkzeug 22 der Kabelbearbeitungsstation 20 und das Kabel 10 sind relative in Bewegungsrichtung 23 zueinander bewegbar, wobei das erste Werkzeug 22 nicht abschliessend aufgezählt je nach Prozessarbeitsschritt ein Abisoliermesser zum Abisolieren der Kabelisolierung 13, ein Bestückungseinrichtung zum Bestücken des Dichtungselements 14 sowie eine Crimpwerkzeug zum Crimpen des Kabelanschlusselements 16 an das Kabel 10 umfasst. Weiter umfasst die Kabelbearbeitungsstation 20 zumindest eine erste bildgebende Sensoreinrichtung 25 zum Detektieren zumindest eines Bildes der Kabelenden 12a-12d des Kabels 10, sowie ein Bildverarbeitungssystem 30. Die erste bildgebende Sensoreinrichtung 25 ist eine Kamera und weist ein zoombares Objektiv und diverse handelsübliche Filterelemente 27 auf. Das Bildverarbeitungssystem 30 ist mit der Steuerungseinrichtung 40 zum Austausch von steuerungsspezifischen Parametern elektrisch verbunden und ist so konfiguriert, um aus dem zumindest einen detektierten Bild einen ersten kabelspezifischen Bildparameter sowie zumindest einen zweiten kabelspezifischen Bildparameter zu erkennen, sowie auf Basis des ersten kabelspezifischen Bildparameters und des zweiten kabelspezifischen Bildparameters zumindest einen steuerungsspezifischen Parameter zu erstellen und an die Steuerungseinrichtung 40 zum Steuern des ersten Werkzeugs 22 zu übertragen. Als erster kabelspezifischer Bildparameter wird beispielsweise der elektrische Leiter 14 erkannt und als zweiter kabelspezifischer Bildparameter wird die Kabelisolierung 13 erkannt. Damit erkennt das Bildverarbeitungssystem 30 den spezifischen Kabeltyp des Kabels 10. Das Bildverarbeitungssystem 30 weist ein KI-Modul 32 auf, welches mit der zumindest einen ersten bildgebenden Sensoreinrichtung 25 verbunden ist und so konfiguriert ist, um aus dem zumindest einen detektierten Bild den ersten kabelspezifischen Bildparameter sowie zumindest den zweiten kabelspezifischen Bildparameter zu erfassen. Ein KI (künstliche Intelligenz) - Modul ist beispielsweise mit externen bzw. separaten Bilddaten oder Parametern (Material, Struktur, Farbe, Form, usw.) zum jeweiligen Kabeltyp trainierbar. Dafür weist das KI-Modul 32 eine Recheneinheit 33 auf und ein neuronales Netzwerk 34 auf, welches ausgebildet ist, das zumindest eine detektierte Bild zu analysieren, wobei das neuronale Netzwerk 34 trainierbar ist.

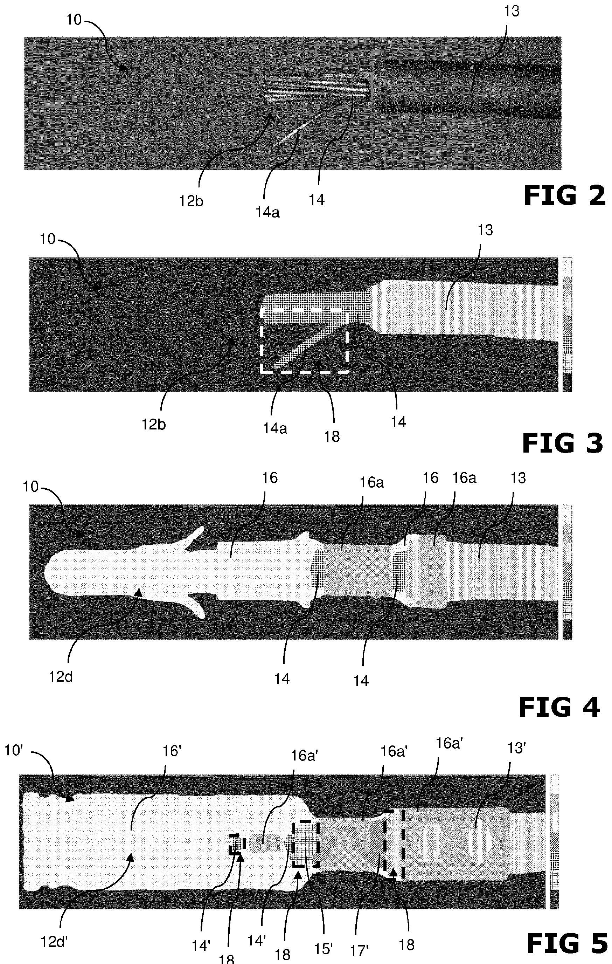

Das KI-Module 32 führt eine semantische Segmentierung des zumindest einen detektierten Bildes durch, um jedem Pixel des detektierten Bildes zumindest einen kabelspezifischen Bildparameter zuzuordnen, sowie den ersten analysierten kabelspezifischen Bildparameter und zumindest den zweiten analysierten kabelspezifischen Bildparameter an das Bildverarbeitungssystem 30 zu übergeben. Das Bildverarbeitungssystem 30 ist so konfiguriert, um das zumindest eine detektierte Bild des Kabelendes 12a-12d auf Basis des ersten analysierten kabelspezifischen Bildparameters und des zweiten analysierten kabelspezifischen Bildparameters zumindest in zwei materialspezifische Bereiche zu unterteilen (siehe auch Fig. 3 und 4). Ein materialspezifischer Bereich unterscheidet sich von einem weiteren materialspezifischen Bereich darin, dass diese zumindest unterschiedliche Materialien aufweisen. Weiters ist eine Datenbank 50 vorhanden, welche mit dem Bildverarbeitungssystem 30 elektrisch verbunden ist, wobei die Datenbank 30 eine Speichereinheit 55 aufweist. In der Speichereinheit 55 sind Referenzbilder zu unterschiedlichen Kabelenden 12a-12d, zu unterschiedlichen Kabeltypen, und/oder zu Dichtungselementen 15 und Kabelanschlusselements 16 abgespeichert, welche in der Kabelbearbeitungsstation 20 bearbeitbar sind, und von dem Bildverarbeitungssystem 30 abrufbar sind. Weiters sind in der Speichereinheit 55 Referenzkonturen als Konturvektoren zu unterschiedlichen Kabelenden 12a-12d, zu unterschiedlichen Kabeltypen, und/oder zu Dichtungselementen 15 und Kabelanschlusselements 16 abgespeichert, welche in der Kabelbearbeitungsstation 20 bearbeitbar sind, und von dem Bildverarbeitungssystem 30 abrufbar sind. Weiters sind in der Datenbank 50 steuerungsspezifische Parameter und/oder Steuerdatensätze gespeichert, mit welchen zumindest das erste Werkzeug 22 steuerbar bzw. regelbar ist. Weiters sind Sollwerte für die kabelspezifischen Bildparameter in der Speichereinheit 55 der Datenbank 50 hinterlegt. Diese Sollwerte können Sollwerte zur Abisolierlänge des Kabelendes 12b sein und/oder die Breite bzw. Dicke des elektrischen Leiters 14 sein und umfassen typischerweise Toleranzwerte zu den jeweiligen Sollwerten. Weiters umfassen diese Sollwerte Symmetriewerte bzw. Verhältniswerte, wie beispielsweise ein Verhältnis von der Abisolierlänge zur Dicke des elektrischen Leiters 14 bzw. zu dem Kabeltyp, welcher sich gerade im Kabelverarbeitungsprozess befindet. Weiters sind weitere Sollwerte bezüglich der unterteilten materialspezifischen Bereiche in der Speichereinheit 55 der Datenbank 50 hinterlegt und von dem Bildverarbeitungssystem 30 abrufbar. Diese weiteren Sollwerte können Sollwerte zur Flächengrösse, Flächenumfang bzw. Flächendurchmesser oder die Randstruktur des jeweiligen materialspezifischen Bereichs umfassen, oder eine Kombination der zuvor genannten Werte umfassen und weisen entsprechende Toleranzwerte auf.

Das Bildverarbeitungssystem 30 ist so konfiguriert, um zumindest den ersten kabelspezifischen Bildparameter und/oder zumindest den ersten analysierten kabelspezifischen Bildparameter aus dem jeweiligen detektierten Bild des Kabelendes 12a-12d des Kabels 10 mithilfe eines Bildmessverfahrens zu erfassen. Der erste kabelspezifische Bildparameter und/oder der zweite kabelspezifische Bildparameter werden bezüglich deren Farbe und/oder Struktur und/oder Form des elektrischen Leiters 14 und/oder der Kabelisolierung 13 und/oder einer Kabelschirmung (siehe Fig. 5) und/oder eines Dichtungselements 15 erkannt.

Das Bildmessverfahren umfasst zumindest einen Bildvermessungsalgorithmus, mit dem das detektierte und/oder das segmentierten Bild verarbeitbar ist. Der Bildvermessungsalgorithmus ist so konfiguriert, um das detektierte bzw. das segmentierte Bild in einem ersten Schritt geometrisch zu vermessen, um den ersten kabelspezifischen Bildparameter und den zweiten kabelspezifischen Bildparameter zu bestimmen sowie um Randstrukturen zu erkennen. Die Randstrukturen können in Konturpunkte unterteilt werden und anschliessend anhand eines Richtungsvektors mathematisch gefiltert werden, um nur die Messpunkte der Schnittkanten zu erhalten. In einem weiteren Schritt kann der Median, das 10%-Quantil und das 90%-Quantil der Messpunkte in der Längsachse des Kabels 10 statistisch ausgewertet werden. Aus der statistischen Streuung der Messpunkte an der Schnittkante in Längsachse des Kabels 10 wird ein Attribut der Schnittqualität im Kabelbearbeitungsprozess ableitbar.

Das Bildverarbeitungssystem 30 vergleicht die kabelspezifischen Bildparameter und/oder die materialspezifischen Bereiche aus den detektierten bzw. analysierten Bildern mit den Referenzbildern bzw. den jeweiligen Sollwerten aus der Datenbank 50 und erstellt steuerungsspezifische Parameter, welche an die die Steuereinrichtung 40 übermittelt werden. Die Steuereinrichtung 40 steuert mithilfe der steuerungsspezifischen Parameter den Antrieb 24 des erste Werkzeug 22.

Fig. 2 bis Fig. 4 zeigen eine erste Ausführungsform der zuvor beschriebenen Bilder. Anhand dieses Beispiels, werden die Zustände des Kabelendes 12a-12d aus den hier vorliegend beschriebenen Prozessarbeitsschritte und Verfahrensschritte bildlich dargestellt. Fig. 2 zeigt ein erstes von der Sensoreinrichtung 25 detektiertes Bild von dem Kabelende 12b. Das Kabelende 12b des Kabels 10 weist eine farbige (blau) Kabelisolierung 13 auf sowie einen elektrischen Leiter 14 mit mehrere Leiterdrähten auf, welche eine kupferfarbige, verdrillte Struktur aufweisen. Die Fig. 3 zeigt das mithilfe des KI-Moduls 32 segmentierte Kabelende 12b, in dem jedem Pixel des detektierten Bildes zumindest einen kabelspezifischen Bildparameter zugeordnet ist. Dabei wird einem Pixel des detektierten Bildes ein Hintergrundsignal als kabelspezifischer Parameter (bspw. schwarz) zugeordnet, wenn für dieses Pixel des detektierten Bildes kein Kabelende 12b bzw. Kabel 10 vorhanden ist. Die Kabelisolierung 13 ist einfarbig dargestellt und der elektrischen Leiter 14, mit mehreren Leiterdrähten, weist eine Schraffierung auf. Das KI-Modul ist entsprechend trainiert und weist dem elektrischen Leiter 14 einen ersten materialspezifischen Bereich zu und der Kabelisolierung 13 einen zweiten materialspezifischen Bereich zu. Sowohl die Darstellung des Kabelendes 12b gemäss Fig. 2 als auch gemäss Fig. 3 zeigen, dass ein Leiterdraht 14a von der eigentlichen Orientierung des elektrischen Leiters 14 absteht. Das Bildverarbeitungssystem 30 vermisst, wie hier vorliegend beschrieben, diesen Bereich 18 und vergleicht die analysierten kabelspezifischen Bildparameter mit den Sollwerten in der Datenbank 50. Fig. 4 zeigt das mithilfe des KI-Moduls 32 segmentierte Kabelende 12d des Kabels 10, wobei das Kabel 10 ein als Stecker ausgebildetes Kabelanschlusselement 16 aufweist. Das Kabelanschlusselement 16 ist mithilfe eines als Crimpwerkzeug ausgebildeten Werkzeugs 22 an den zwei Crimpbereichen 16a, an dem elektrischen Leiter 14 sowie an der Kabelisolierung 13 befestigt, bzw. gecrimpt. Das segmentierte Bild zeigt für die zuvor genannten Bereiche bzw. Bauteile zugeordnete Farben, bzw. Schraffierungen auf, welche auf deren Farbe und/oder Struktur und/oder Form hinweisen und vom Bildverarbeitungssystem 30 erkannt werden und vermessen werden, um gegebenenfalls einen neuen steuerungsspezifischen Parameter bzw. Steuerdatensätze an die Steuerungseinrichtung 40 übergeben zu können. Die zuvor genannten Sollwerte können Werte zur Aufpinselung von den Leiterdrähten am Leiter 14 oder der Länge des vorstehenden Leiterdrahts 14a oder einen Toleranzwert für Verschmutzungsreste auf dem Leiterdraht 14a umfassen und ebenfalls in der Speichereinheit 55 der Datenbank 50 hinterlegt sein.

Fig. 5 zeigt eine weitere Ausführungsform der zuvor beschriebenen Bilder eines Kabelendes 12d', vergleichbar mit der Fig. 4, wobei diese Kabel 10' ein Koaxialkabel als Kabeltyp darstellt, an welchem ein weiterer Stecker als Kabelanschlusselement 16' angeordnet ist. Das Kabelanschlusselement 16' ist mithilfe eines als Crimpwerkzeug ausgebildeten Werkzeugs an den zwei Crimpbereichen 16a' an dem elektrischen Leiter 14' sowie an der Kabelisolierung 13' befestigt, bzw. gecrimpt. Das Kabel 10' weist weiters ein Dielektrikum 15' und eine Kabelschirmung 17' auf. Das segmentierte Bild zeigt für die zuvor genannten Bereiche bzw. Bauteile zugeordnete Markierungen, bzw. Schraffierungen, welche auf deren Farbe und/oder Struktur und/oder Form hinweisen und vom Bildverarbeitungssystem 30 erkannt werden und vermessen werden. Das Bildverarbeitungssystem 30 vermisst, wie hier vorliegend beschrieben, die jeweiligen Bereiche 18, um gegebenenfalls einen neuen steuerungsspezifischen Parameter bzw. Steuerdatensätze an die Steuerungseinrichtung 40 erstellen und übergeben zu können.

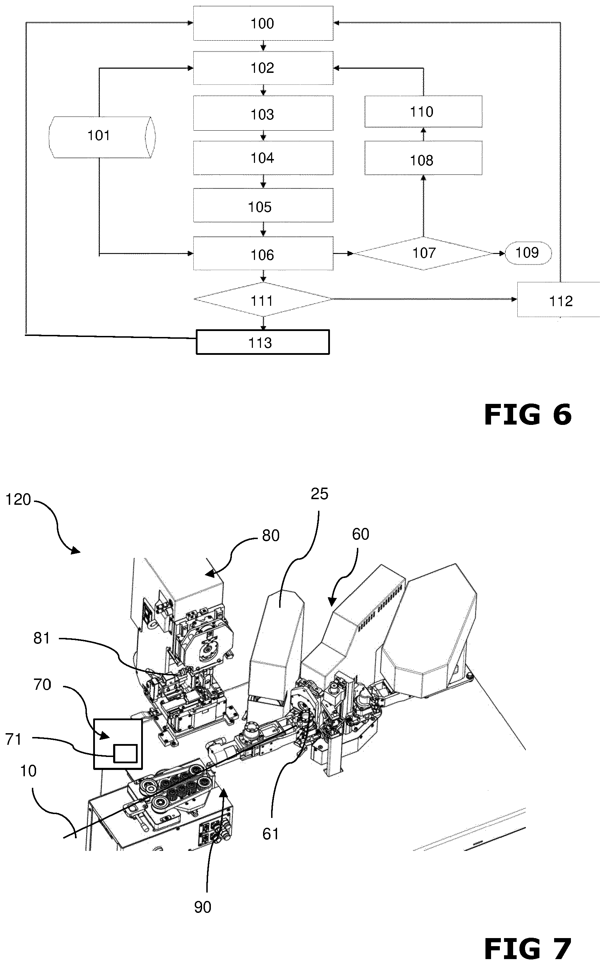

Fig. 6 zeigt ein erstes Verfahren zum automatischen Bestimmen und Erzeugen von Steuerdatensätzen und/oder steuerungsspezifischen Parametern zum Steuern zumindest einer Kabelbearbeitungsstation 20, welches computerimplementiert in der Steuerungseinrichtung 40 der Kabelbearbeitungsstation 20 hinterlegt ist. In der weiteren Folge wird auf die Fig. 1 Bezug genommen.

In einem ersten Schritt wird ein Endloskabel oder ein bereits zu einer definierten Kabellänge zugeschnittenes Kabel 10 zur Kabelbearbeitungsstation 20 transportiert (Schritt 100).

Anschliessend werden Auftragsdaten aus der Datenbank 50 zum Bearbeiten des Kabels 10, welche Steuerdatensätzen und/oder steuerungsspezifischen Parametern zum Steuern des ersten Werkzeugs 22 umfassen, in die Steuerungseinrichtung 40 geladen (Schritt 101). Die Auftragsdaten zu dem zu bearbeitenden Kabeln 10 umfassen weiters entsprechende Steuertoleranzen sowie kabelspezifische Bildparameter und/oder materialspezifische Bereiche samt Toleranzwerte.

In weiterer Folge erfolgt das Bearbeiten des Kabelendes 12a, wobei hier vorliegend das Abisolieren der Kabelisolierung 13 erfolgt (Schritt 102).

Anschliessend wird ein Bild 26 des zumindest einen Kabelendes 12b des Kabels 10 mit der ersten bildgebende Sensoreinrichtung 25 detektiert (Schritt 103).

In weiter Folge wird das detektierte Bild 26 an das Bilderarbeitungssystem 30 übermittelt und ein erster kabelspezifischer Bildparameter sowie zumindest ein zweiter kabelspezifischer Bildparameter erkannt, sowie der erste kabelspezifische Bildparameter und der zweite kabelspezifische Bildparameter vom KI-Modul 32 analysiert und eine semantische Segmentierung des detektierten Bildes 26 durchgeführt (Schritt 104).

Anschliessend wird das detektierte Bild 26 des Kabelendes 12b auf Basis des ersten kabelspezifischen Bildparameters und des zweiten kabelspezifischen Bildparameters zumindest in zwei materialspezifische Bereiche, welche die Kabelisolierung 13 und den elektrischen Leiter 14 umfassen, unterteilt und die materialspezifischen Bereiche vom Bildvermessungsalgorithmus in der Recheneinheit im Bildverarbeitungssystem 30 geometrisch vermessen (Schritt 105).

In weiter Folge wird zumindest einer der vermessenen kabelspezifischen Bildparameter mit einem Sollwert für diesen kabelspezifischen Bildparameter verglichen, wobei der Sollwert aus den Auftragsdaten stammt (Schritt 106). Dabei wird ein Abweichungswert bestimmt.

Nach dem Vergleich des vermessenen kabelspezifischen Bildparameter mit dem entsprechenden Sollwert wird festgestellt, ob sich der Abweichungswert innerhalb der Steuertoleranz des steuerungsspezifischen Parameters befindet (Schritt 107).

Liegt der vermessene kabelspezifische Bildparameter ausserhalb der jeweiligen Steuertoleranz, dann wird der Kabelverarbeitungsprozess abgebrochen und eine Fehlermeldung an die Steuerungseinrichtung 40 bzw. an den Operator der Kabelbearbeitungsstation übermittelt (Schritt 109). Beispielsweise umfasst die Fehlermeldung die Aufforderung das erste Werkzeug 22 zu tauschen und wird visuell an einer Anzeige der Kabelbearbeitungsstation 20 angezeigt. Das fehlerhafte Kabel wird ausgeworfen.

Liegt der vermessene kabelspezifische Bildparameter innerhalb der jeweiligen Steuertoleranz des steuerungsspezifischen Parameters des ersten Werkzeugs, dann wird ein Mittelwert im Bildverarbeitungssystem 30 berechnet (Schritt 108).

Auf Basis des berechneten Mittelwerts wird zumindest ein neuer Steuerdatensatz und/oder zumindest ein neuer steuerungsspezifischer Parameter erstellt, in der Speichereinheit 55 gespeichert und an die Steuerungseinrichtung 40 zum Steuern bzw. zum Regeln des Werkzeugs 22 übermittelt (Schritt 110).

In einem nächsten Schritt 111 erfolgt im Bildverarbeitungssystem 30 ein Vergleich des vermessenen kabelspezifischen Bildparameters mit dem entsprechenden Sollwert bzw. des Toleranzwertes des entsprechenden Sollwerts, wobei bei einer Abweichung der Vergleichsparameter, das im Kabelbearbeitungsprozess befindliche Kabel 10 entsorgt wird (Schritt 112) oder dieser Kabelbearbeitungsprozess beendet wird (Schritt 113).

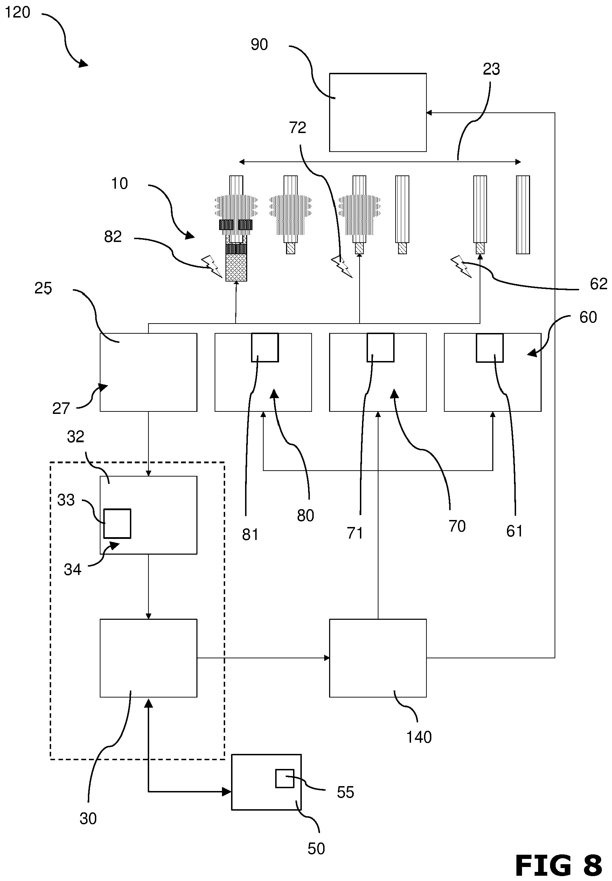

Die Fig. 7 und 8 zeigen eine Kabelbearbeitungsmaschine 120 mit mehreren Kabelbearbeitungsstationen 60, 70, 80. An der Kabelbearbeitungsmaschine 120 ist ein Kabelförderer 90 zum Transportieren des Kabels 10 zu den Kabelbearbeitungsstationen 60, 70, 80 angeordnet. Dabei erfolgt die Bearbeitung des Kabels 10, wie in Fig. 1 gezeigt und beschrieben, wobei anstatt einer Kabelbearbeitungsstation 20 mit mehreren Werkzeugen 22, mehrere Kabelbearbeitungsstationen 60, 70, 80 mit jeweils einem separaten Werkzeug vorhanden sind. Die in Fig. 8 gezeigte Kabelbearbeitungsmaschine 120 weist eine Kabelbearbeitungsstation 60 zum Abisolieren der Kabelisolierung 13 vom Kabel 10 auf, eine Kabelbearbeitungsstation 70 zum Bestücken eines Dichtungselements 15 am Kabel 10 auf und eine Kabelbearbeitungsstation 80 zum Crimpen eines Kabelanschlusselements 16 am Kabel 10 auf. Die Kabelbearbeitungsstationen 60, 70, 80 weisen jeweils ein Werkzeug, nämlich ein Abisoliermesser 61, eine Bestückungseinrichtung 71 und ein Crimpwerkzeug 81 auf, welche jeweils einen Antrieb umfassen und mit einer Zentralsteuereinrichtung 140 zum Austausch von steuerungsspezifischen Parametern und/oder Steuerdatensätzen elektrisch verbunden sind.

Wie bereits in Fig. 1 beschrieben, ist ein Bildverarbeitungssystem 30 vorhanden, das mit einer Zentralsteuereinrichtung 140 der Kabelbearbeitungsmaschine 120 zum Austausch von steuerungsspezifischen Parametern und/oder Steuerdatensätzen verbunden ist. Das Bildverarbeitungssystem 30 ist so konfiguriert, um auf Basis des ersten kabelspezifischen Bildparameter und des zweiten kabelspezifischen Bildparameter zumindest einen steuerungsspezifischen Parametern und/oder einen Steuerdatensatz zu erstellen und an die Zentralsteuereinrichtung 140 zum Steuern der Werkzeuge Kabelbearbeitungsstationen 60, 70, 80 zu übertragen. Die erste bildgebende Sensoreinrichtung 25 ist ausgebildet, vor jeden Prozessarbeitsschritt in den einzelnen Kabelbearbeitungsstationen 60, 70, 80 zumindest ein separates Bild 62, 72, 82 des Kabelendes des Kabels 10 zu detektieren.

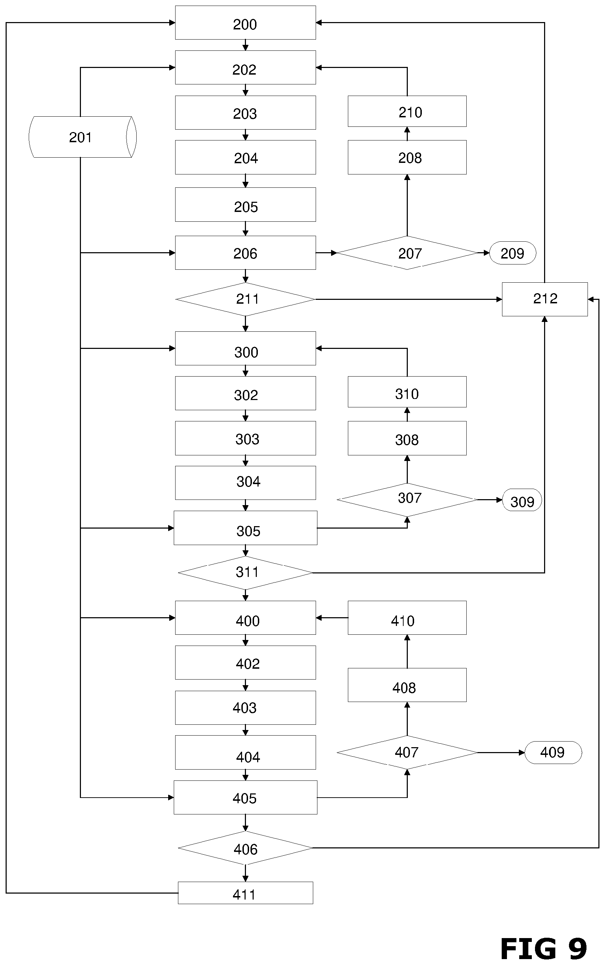

Fig. 9 zeigt ein weiteres Verfahren zum automatischen Bestimmen und Erzeugen von Steuerdatensätzen und/oder steuerungsspezifischen Parametern zum Steuern der Kabelbearbeitungsmaschine 120 mit mehreren Kabelbearbeitungsstationen 60, 70, 80, welche computerimplementiert in der Zentralsteuereinrichtung 140 der Kabelbearbeitungsmaschine 120 hinterlegt sind/ist. Das nachfolgend beschriebene Verfahren umfasst zumindest teilweise das in Fig. 6 offenbarte Verfahren. In der weiteren Folge wird auf die Fig. 1, Fig. 7 sowie Fig. 8 Bezug genommen.

In einem ersten Schritt wird ein Endloskabel oder ein bereits zu einer definierten Kabellänge zugeschnittenes Kabel 10 mit dem Kabelförderer 90 zur Kabelbearbeitungsstation 60 transportiert (Schritt 200).

Anschliessend werden Auftragsdaten aus der Speichereinheit 55 der Datenbank 50 zum Bearbeiten des Kabels 10, welche Steuerdatensätzen und/oder steuerungsspezifischen Parametern zum Steuern des Abisoliermessers 61 umfassen, in die Zentralsteuereinrichtung 140 geladen (Schritt 201). Die Auftragsdaten zu dem zu bearbeitenden Kabeln 10 umfassen weiters entsprechende Steuertoleranzen sowie kabelspezifische Bildparameter und/oder materialspezifische Bereiche samt Toleranzwerte.

In weiterer Folge erfolgt das Bearbeiten des Kabelendes 12a, wobei hier vorliegend das Abisolieren der Kabelisolierung 13 erfolgt (Schritt 202).

Anschliessend wird ein erstes Bild 62 des zumindest einen Kabelendes 12b des Kabels mit der ersten bildgebende Sensoreinrichtung 25 detektiert (Schritt 203).

In weiter Folge wird das detektierte Bild 62 an das Bilderarbeitungssystem 30 übermittelt und ein erster kabelspezifischer Bildparameter sowie zumindest einen zweiter kabelspezifischer Bildparameter erkennt, sowie der erste kabelspezifische Bildparameter und der zweite kabelspezifische Bildparameter vom KI-Modul 32 analysiert und eine semantische Segmentierung des detektierten Bildes 62 durchgeführt (Schritt 204).

Anschliessend wird das detektierte Bild 62 des Kabelendes 12b auf Basis des ersten kabelspezifischen Bildparameters und des zweiten kabelspezifischen Bildparameters zumindest in zwei materialspezifische Bereiche, welche die Kabelisolierung 13 und den elektrischen Leiter 14 zugeordnet sind, unterteilt und die materialspezifischen Bereiche vom Bildvermessungsalgorithmus bezüglich deren Flächengrösse und/oder Bereichslänge und/oder deren Randstruktur in der Recheneinheit im Bildverarbeitungssystem 30 geometrisch vermessen (Schritt 205).

In weiter Folge wird zumindest einer der kabelspezifischen Bildparameter mit einem Sollwert für diesen kabelspezifischen Bildparameter verglichen oder zumindest ein materialspezifischer Bereich mit einem Sollwert für diesen materialspezifischen Bereich verglichen, wobei der jeweilige Sollwert aus den Auftragsdaten stammt (Schritt 206). Dabei wird ein Abweichungswert bestimmt.

Nach dem jeweiligen Vergleich des kabelspezifischen Bildparameter oder materialspezifischen Bereichs mit dem entsprechenden Sollwert wird festgestellt, ob sich der Abweichungswert innerhalb der Steuertoleranz des steuerungsspezifischen Parameters befindet (Schritt 207).

Liegt der vermessene kabelspezifische Bildparameter oder der materialspezifische Bereich ausserhalb der jeweiligen Steuertoleranz, dann wird der Kabelverarbeitungsprozess abgebrochen und eine Fehlermeldung an die Zentralsteuereinrichtung 140 bzw. an den Operator der Kabelbearbeitungsstation übermittelt (Schritt 209). Beispielsweise umfasst die Fehlermeldung die Aufforderung das Werkzeug zu tauschen und wird visuell an einer Anzeige der Kabelbearbeitungsstation angezeigt. Das fehlerhafte Kabel wird ausgeworfen.

Liegt der vermessene kabelspezifische Bildparameter oder der materialspezifische Bereich innerhalb der jeweiligen Steuertoleranz des steuerungsspezifischen Parameters des Abisoliermessers 61, dann wird ein Mittelwert im Bildverarbeitungssystem 30 berechnet (Schritt 208).

In einem nächsten Schritt 211 erfolgt im Bildverarbeitungssystem 30 ein Vergleich des materialspezifischen Bereichs mit dem entsprechenden Toleranzwert, wobei bei einer Abweichung der Abweichungswerts, das im Kabelbearbeitungsprozess befindliche Kabel 10 entsorgt wird (Schritt 212).

In einem weiteren Schritt wird das zuvor bearbeitete Kabel 10 mit dem Kabelförderer 90 entlang der Bewegungsrichtung 23 zur Kabelbearbeitungsstation 70 transportiert und die Auftragsdaten aus der Speichereinheit 55 der Datenbank 50 zum Bearbeiten des Kabels 10, welche Steuerdatensätzen und/oder steuerungsspezifischen Parametern zum Steuern des Bestückungseinrichtung 71 zum Bestücken des Dichtungselements 15 und/oder des Kabelförderers 90 umfassen, in die Zentralsteuereinrichtung 140 geladen. In weiterer Folge erfolgt das Bearbeiten des Kabelendes 12c, wobei das Dichtungselement 15 am Kabelende 12c angeordnet wird (Schritt 300). Die Auftragsdaten zu dem zu bearbeitenden Kabeln 10 umfassen weiters entsprechende Steuertoleranzen sowie kabelspezifische Bildparameter und/oder materialspezifische Bereiche samt Toleranzwerte.

Anschliessend wird ein zweites Bild 72 des zumindest einen Kabelendes 12c des Kabels mit der ersten bildgebende Sensoreinrichtung 25 detektiert (Schritt 302).

In weiter Folge wird das zweite detektierte Bild 72 an das Bilderarbeitungssystem 30 übermittelt und ein erster kabelspezifischer Bildparameter ein zweiter kabelspezifischer Bildparameter sowie ein weiterer/dritter kabelspezifischer Bildparameter erkannt, sowie der erste kabelspezifische Bildparameter, der zweite kabelspezifische Bildparameter und der dritte kabelspezifische Bildparameter vom KI-Modul 32 analysiert und eine semantische Segmentierung des detektierten Bildes 72 durchgeführt (Schritt 303).

Anschliessend wird das zweite detektierte Bild 72 des Kabelendes 12c auf Basis des ersten kabelspezifischen Bildparameters, des zweiten kabelspezifischen Bildparameters und des dritten kabelspezifischen Bildparameters zumindest in drei materialspezifische Bereiche, welche die Kabelisolierung 13, den elektrischen Leiter 14 sowie dem Dichtungselement 15 zugeordnet sind, unterteilt und die materialspezifischen Bereiche vom Bildvermessungsalgorithmus bezüglich deren Flächengrösse und/oder Bereichslänge und/oder deren Randstruktur in der Recheneinheit im Bildverarbeitungssystem 30 geometrisch vermessen (Schritt 304).

In weiter Folge wird zumindest einer der kabelspezifischen Bildparameter mit einem Sollwert für diesen kabelspezifischen Bildparameter verglichen oder zumindest ein materialspezifischer Bereich mit einem Sollwert für diesen materialspezifischen Bereich verglichen, wobei der jeweilige Sollwert aus den Auftragsdaten stammt (Schritt 305). Dabei wird ein Abweichungswert bestimmt.

Nach dem jeweiligen Vergleich des kabelspezifischen Bildparameters oder materialspezifischen Bereichs mit dem entsprechenden Sollwert wird festgestellt, ob sich der Abweichungswert innerhalb der Steuertoleranz des steuerungsspezifischen Parameters befindet (Schritt 307).

Liegt der vermessene kabelspezifische Bildparameter oder der materialspezifische Bereich ausserhalb der jeweiligen Steuertoleranz, dann wird der Kabelverarbeitungsprozess abgebrochen und/oder eine Fehlermeldung an die Zentralsteuereinrichtung 140 bzw. an den Operator der Kabelbearbeitungsstation übermittelt (Schritt 309). Beispielsweise umfasst die Fehlermeldung die Aufforderung das Werkzeug zu reinigen und wird visuell an einer Anzeige der Kabelbearbeitungsstation angezeigt. Das fehlerhafte Kabel wird ausgeworfen.

Liegt der vermessene kabelspezifische Bildparameter oder der materialspezifische Bereich innerhalb der jeweiligen Steuertoleranz des steuerungsspezifischen Parameters der Bestückungseinrichtung 71 und/oder des Kabelförderers 90, dann wird ein Mittelwert im Bildverarbeitungssystem 30 berechnet (Schritt 308).

Auf Basis des berechneten Mittelwerts wird zumindest ein neuer Steuerdatensatz und/oder zumindest ein neuer steuerungsspezifischer Parameter erstellt, in der Speichereinheit 55 gespeichert und an die Zentralsteuereinrichtung 140 zum Steuern bzw. zum Regeln der Bestückungseinrichtung 71 und/oder des Kabelförderers 90 übermittelt (Schritt 310).

In einem nächsten Schritt 311 erfolgt im Bildverarbeitungssystem 30 ein Vergleich des materialspezifischen Bereichs mit dem entsprechenden Toleranzwert, wobei bei einer Abweichung der Abweichungswerts, das im Kabelbearbeitungsprozess befindliche Kabel 10 entsorgt wird (Schritt 212).

In einem weiteren Schritt wird das zuvor bearbeitete Kabel 10 mit dem Kabelförderer 90 entlang der Bewegungsrichtung 23 zur Kabelbearbeitungsstation 80 transportiert und die Auftragsdaten aus der Speichereinheit 55 der Datenbank 50 zum Bearbeiten des Kabels 10, welche Steuerdatensätzen und/oder steuerungsspezifischen Parametern zum Steuern eines Crimpwerkzeugs 81 zum Crimpen eines Kabelanschlusselements 16 auf das Kabelende des Kabels 10 und/oder des Kabelförderers 90 umfassen, in die Zentralsteuereinrichtung 140 geladen. In weiterer Folge erfolgt das Bearbeiten des Kabelendes 12d, wobei das Kabelanschlusselement 16 am Kabelende 12d angeordnet wird (Schritt 400).

Anschliessend wird ein drittes Bild 82 des zumindest einen Kabelendes 12d des Kabels 10 mit der ersten bildgebenden Sensoreinrichtung 25 detektiert (Schritt 402).

In weiterer Folge wird das dritte detektierte Bild 82 an das Bilderarbeitungssystem 30 übermittelt und ein erster kabelspezifischer Bildparameter, ein zweiter kabelspezifischer Bildparameter, ein dritter kabelspezifischer Bildparameter sowie ein weiterer kabelspezifischer Bildparameter erkannt, sowie der erste kabelspezifische Bildparameter, der zweite kabelspezifische Bildparameter, der dritte kabelspezifische Bildparameter und der weiterer kabelspezifische Bildparameter vom KI-Modul 32 analysiert und eine semantische Segmentierung des dritten detektierten Bildes 82 durchgeführt (Schritt 403).

Anschliessend wird das dritte detektierte Bild 82 des Kabelendes 12d auf Basis des ersten kabelspezifischen Bildparameters, des zweiten kabelspezifischen Bildparameters und des dritten kabelspezifischen Bildparameters und des weiteren kabelspezifischen Bildparameters zumindest in vier materialspezifische Bereiche, welche die Kabelisolierung 13, den elektrischen Leiter 14 sowie dem Dichtungselement 15, und dem Kabelanschlusselement 16 zugeordnet sind, unterteilt und die materialspezifischen Bereiche vom Bildvermessungsalgorithmus bezüglich deren Flächengrösse und/oder Bereichslänge und/oder deren Randstruktur in der Recheneinheit im Bildverarbeitungssystem 30 geometrisch vermessen (Schritt 404).

In weiterer Folge wird zumindest einer der kabelspezifischen Bildparameter mit einem Sollwert für diesen kabelspezifischen Bildparameter verglichen oder zumindest ein materialspezifischer Bereich mit einem Sollwert für diesen materialspezifischen Bereich verglichen, wobei der jeweilige Sollwert aus den Auftragsdaten stammt (Schritt 405). Dabei wird ein Abweichungswert bestimmt.

Nach dem jeweiligen Vergleich des kabelspezifischen Bildparameter oder materialspezifischen Bereichs mit dem entsprechenden Sollwert wird festgestellt, ob sich der Abweichungswert innerhalb der Steuertoleranz des steuerungsspezifischen Parameters befindet (Schritt 407).

Liegt der vermessene kabelspezifische Bildparameter oder der materialspezifische Bereich ausserhalb der jeweiligen Steuertoleranz, dann wird der Kabelverarbeitungsprozess abgebrochen und eine Fehlermeldung an die Zentralsteuereinrichtung 140 bzw. an den Operator der Kabelbearbeitungsstation übermittelt (Schritt 409). Beispielsweise umfasst die Fehlermeldung die Aufforderung das Werkzeug zu tauschen oder das Werkzeug auf Defekte zu prüfen und wird visuell an einer Anzeige der Kabelbearbeitungsstation angezeigt. Das fehlerhafte Kabel wird ausgeworfen.

Liegt der vermessene kabelspezifische Bildparameter oder der materialspezifische Bereich innerhalb der jeweiligen Steuertoleranz des steuerungsspezifischen Parameters des Crimpwerkzeugs 81 und/oder des Kabelförderers 90, dann wird ein Mittelwert im Bildverarbeitungssystem 30 berechnet (Schritt 408).

Auf Basis des berechneten Mittelwerts wird zumindest ein neuer Steuerdatensatz und/oder zumindest ein neuer steuerungsspezifischer Parameter erstellt, in der Speichereinheit 55 gespeichert und an die Zentralsteuereinrichtung 140 zum Steuern bzw. zum Regeln des Crimpwerkzeugs 81 und/oder des Kabelförderers 90 übermittelt (Schritt 410).

Weiters erfolgt im Bildverarbeitungssystem 30 ein Vergleich des vermessenen materialspezifischen Bereichs mit dem entsprechenden Toleranzwert, wobei bei einer Abweichung der Abweichungswerts, das im Kabelbearbeitungsprozess befindliche Kabel 10 entsorgt wird (Schritt 212).

Anschliessend wird das fertig bearbeitete Kabel 10 in einer Kabelablage abgelegt (Schritt 411).

### Bezugszeichenliste

- 10: Kabel
- 10': Kabel
- 12a-12d: Kabelende von 10
- 12d': Kabelende von 10'
- 13: Kabelisolierung von 10
- 13': Kabelisolierung von 10'
- 14: elektrische Leiter von 10
- 14': elektrische Leiter von 10'
- 15: Dichtungselement von 10
- 15': Dielektrikum von 10'
- 16: Kabelanschlusselement von 10
- 16': Kabelanschlusselement von 10'
- 16a': Crimpbereiche von 10'
- 17': Kabelschirmung von 10'
- 18: Bereiche
- 20: Kabelbearbeitungsstation
- 22: erste Werkzeug

- 23: Bewegungsrichtung von 22
- 24: Antrieb von 22
- 25: bildgebende Sensoreinrichtung
- 26: Bild
- 27: Filterelemente von 25
- 30: Bildverarbeitungssystem
- 32: KI-Modul
- 33: Recheneinheit
- 34: neuronales Netzwerk
- 40: Steuerungseinrichtung
- 50: Datenbank
- 55: Speichereinheit
- 60: Kabelbearbeitungsstation
- 61: Abisoliermesser
- 62: erstes Bild
- 70: Kabelbearbeitungsstation
- 71: Bestückungseinrichtung
- 72: zweites Bild
- 80: Kabelbearbeitungsstation
- 81: Crimpwerkzeug
- 82: drittes Bild
- 90: Kabelförderer
- 120: Kabelbearbeitungsmaschine
- 140: Zentralsteuereinrichtung

- 100-113: Prozessarbeitsschritte
- 200-411: Prozessarbeitsschritte

## Patentansprüche

1. Kabelbearbeitungsstation (20; 60; 70; 80) zum Bearbeiten eines Kabelendes (12a-12d; 12d') eines Kabels (10; 10'), insbesondere eines elektrischen oder optischen Kabels, umfassend zumindest ein erstes Werkzeug (22; 61; 71; 81; 90) zum Bearbeiten des Kabels (10; 10'), eine Steuereinrichtung (40) zum Steuern des zumindest ersten Werkzeugs (22; 61; 71; 81; 90) **dadurch gekennzeichnet, dass** zumindest eine erste bildgebende Sensoreinrichtung (25) zum Detektieren zumindest eines Bildes (62; 72; 82) zumindest eines Kabelendes (12a-12d; 12d') des Kabels (10; 10'), sowie ein Bildverarbeitungssystem (30), wobei das Bildverarbeitungssystem (30) mit der Steuerungseinrichtung (40) zum Austausch von steuerungsspezifischen Parametern verbunden ist und das Bildverarbeitungssystem (30) so konfiguriert ist, um aus dem zumindest einen detektierten Bild (62; 72; 82) einen ersten kabelspezifischen Bildparameter sowie zumindest einen zweiten kabelspezifischen Bildparameter zu erkennen, sowie auf Basis des ersten kabelspezifischen Bildparameters und des zweiten kabelspezifischen Bildparameters zumindest einen steuerungsspezifischen Parameter zu erstellen und an die Steuerungseinrichtung (40) zum Steuern des ersten Werkzeugs (22; 61; 71; 81; 90) zu übertragen.

2. Kabelbearbeitungsstation nach Anspruch 1, **dadurch gekennzeichnet, dass** ein KI-Modul (32) vorhanden ist, welches mit der zumindest einen ersten bildgebenden Sensoreinrichtung (25) verbunden ist und so konfiguriert ist, um aus dem zumindest einen detektierten Bild (62; 72; 82) den ersten kabelspezifischen Bildparameter sowie zumindest den zweiten kabelspezifischen Bildparameter zu erfassen, wobei das KI-Modul (32) bevorzugt zumindest ein neuronales Netzwerk (34) umfasst, welches ausgebildet ist, das zumindest eine detektierte Bild (62; 72; 82) zu analysieren und weiter bevorzugt eine semantische Segmentierung des zumindest einen detektierten Bildes (62; 72; 82) durchzuführen, um jedem Pixel des detektierten Bildes (62; 72; 82) zumindest einen kabelspezifischen Bildparameters zuzuordnen, sowie den ersten analysierten kabelspezifischen Bildparameter und zumindest den zweiten analysierten kabelspezifischen Bildparameter an das Bildverarbeitungssystem (30) zu übergeben.

3. Kabelbearbeitungsstation nach Anspruch 1 oder 2, **dadurch gekennzeichnet, dass** das Bildverarbeitungssystem (30) so konfiguriert ist, um eine Segmentierung des zumindest einen detektierten Bildes (62; 72; 82) durchzuführen und/oder das Bildverarbeitungssystem (30) das zumindest eine detektierte Bild (62; 72; 82) des Kabelendes (12a-12d; 12d') des Kabels (10; 10') auf Basis des ersten kabelspezifischen Bildparameters und des zweiten kabelspezifischen Bildparameters zumindest in zwei materialspezifische Bereiche zu unterteilen, bevorzugt auf Basis des ersten analysierten kabelspezifischen Bildparameters und des zweiten analysierten kabelspezifischen Bildparameters zumindest in zwei materialspezifische Bereiche zu unterteilen.

4. Kabelbearbeitungsstation nach Anspruch 3, **dadurch gekennzeichnet, dass** der erste materialspezifische Bereich zumindest den elektrischen Leiter (14; 14') des Kabels (10; 10') umfasst und der zweite materialspezifische Bereich zumindest die Kabelisolierung (13; 13') umfasst.

5. Kabelbearbeitungsstation nach einem der Ansprüche 1 bis 4, **dadurch gekennzeichnet, dass** das eine Datenbank (50) vorhanden ist, welche mit dem Bildverarbeitungssystem (30) und/oder mit dem KI-Modul (32) verbunden sind, wobei die Datenbank (50) zumindest eine Speichereinheit (55) aufweist und in der zumindest einen Speichereinheit (55) Referenzbilder und/oder Referenzkonturen zu unterschiedlichen Kabelenden (12a-12d; 12d') hinterlegt sind und/oder zumindest ein Sollwert für zumindest einen kabelspezifischen Bildparameter und/oder zumindest einem materialspezifische Bereich am Kabelende(12a-12d; 12d'), hinterlegt ist.

6. Kabelbearbeitungsstation nach einem der Ansprüche 1 bis 5, **dadurch gekennzeichnet, dass** das Bildverarbeitungssystem (30) so konfiguriert ist, um zumindest den ersten kabelspezifischen Bildparameter und/oder zumindest den ersten analysierten kabelspezifischen Bildparameter aus dem detektierten Bild (62; 72; 82) des Kabelendes (12a-12d; 12d') des Kabels (10; 10') mithilfe eines Bildmessverfahrens zu erfassen.

7. Kabelbearbeitungsstation nach einem der Ansprüche 1 bis 6, **dadurch gekennzeichnet, dass** der erste kabelspezifische Bildparameter und/oder der zweite kabelspezifische Bildparameter zumindest aus der Gruppe der Farbe oder Struktur oder Form des elektrischen Leiters (14; 14') und/oder der Kabelisolierung (13; 13') und/oder einer Kabelschirmung (17') und/oder eines Dichtungselements (15) sind.

8. Kabelbearbeitungsstation nach einem der Ansprüche 2 bis 7, **dadurch gekennzeichnet, dass** das KI-Modul (32) und/oder das Bildverarbeitungssystem (30) so konfiguriert ist, um aus dem zumindest einen detektierten Bild (62; 72; 82) zumindest einen weiteren kabelspezifischen Bildparameter zu erfassen, welcher insbesondere ein Kabelanschlusselement (15) für das Kabelende (12a-12d; 12d') des Kabels (10;10') zuzuordnen ist und vorteilhaft das neuronale Netzwerk (34) im KI-Modul (32) ausgebildet ist.

9. Kabelbearbeitungsstation nach einem der Ansprüche 1 bis 8, **dadurch gekennzeichnet, dass** die Steuerungseinrichtung (40) ausgebildet ist, einen Prozessarbeitsschritt des zumindest einen ersten Werkzeugs (22; 61; 71; 81; 90) auf Basis des zumindest einen steuerungsspezifischen Parameters anzuhalten und/oder zu verhindern.

10. Computerimplementiertes Verfahren zum automatischen Bestimmen und Erzeugen von Steuerdatensätzen und/oder steuerungsspezifischen Parametern zum Steuern zumindest einer Kabelbearbeitungsstation (20; 60; 70; 80), insbesondere einer Kabelbearbeitungsstation (20) nach einem der Ansprüche 1 bis 9, welche zumindest ein Kabelende eines Kabels bearbeitet, wobei zumindest ein Bild (62; 72; 82) des zumindest einen Kabelendes (12a-12d; 12d') des Kabels (10; 10') mit einer ersten bildgebenden Sensoreinrichtung (25) detektiert wird, und automatisch zumindest ein Steuerdatensatz und/oder ein steuerungsspezifischen Parameter erzeugt und gespeichert wird, und ein Bildverarbeitungssystem (30) vorhanden ist, welche das detektierte Bild (62; 72; 82) empfängt und einen ersten kabelspezifischen Bildparameter sowie zumindest einen zweiten kabelspezifischen Bildparameter erkennt und auf Basis des ersten kabelspezifischen Bildparameters und des zweiten kabelspezifischen Bildparameters den zumindest einen Steuerdatensatz und/oder den zumindest einen steuerungsspezifischen Parameter erstellt.

11. Computerimplementiertes Verfahren nach Anspruch 10, **dadurch gekennzeichnet, dass** zumindest ein steuerungsspezifischer Parameter an die Steuereinrichtung (40) übermittelt wird und bevorzugt zumindest ein Steuerdatensatz an eine Speichereinheit (55) übermittelt wird.

12. Computerimplementiertes Verfahren nach Anspruch 10 oder 11, **dadurch gekennzeichnet, dass** aus dem zumindest einen detektierten Bild (62; 72; 82) mithilfe eines KI-Moduls (32) der erste kabelspezifische Bildparameter sowie zumindest der zweite kabelspezifische Bildparameter erfasst wird, wobei das KI-Modul (32) und/oder das Bildverarbeitungssystem (30) das zumindest eine detektierte Bild (62; 72; 82) analysiert und bevorzugt eine semantische Segmentierung des zumindest einen detektierten Bildes (62; 72; 82) durchführt und jedem Pixel des detektierten Bildes zumindest einen kabelspezifischen Bildparameter zuordnet und das KI-Modul (32) vorteilhaft mithilfe des zumindest einem kabelspezifischen Bildparameter trainiert wird.

13. Computerimplementiertes Verfahren nach einem der Ansprüche 10 bis 12, **dadurch gekennzeichnet, dass** das zumindest eine detektierte Bild (62; 72; 82) des Kabelendes (12a-12d; 12d') des Kabels (10; 10') auf Basis des ersten kabelspezifischen Bildparameters und des zweiten kabelspezifischen Bildparameters zumindest in zwei materialspezifische Bereiche unterteilt wird, bevorzugt auf Basis des ersten analysierten kabelspezifischen Bildparameters und des zweiten analysierten kabelspezifischen Bildparameters zumindest in zwei materialspezifische Bereiche unterteilt wird.

14. Computerimplementiertes Verfahren nach einem der Ansprüche 10 bis 13, **dadurch gekennzeichnet, dass** der zumindest eine kabelspezifische Bildparameter mit einem Sollwert für diesen kabelspezifischen Bildparameter verglichen wird und auf Basis dieses Vergleichs zumindest einen steuerungsspezifischen Parameter und/oder zumindest einen Steuerdatensatz erstellt wird.

15. Kabelbearbeitungsmaschine (120) mit zumindest zwei Kabelbearbeitungsstationen (20; 60; 70; 80), wobei zumindest eine Kabelbearbeitungsstation (20) nach einem der vorhergehenden Ansprüche 1 bis 9 ausgebildet ist, mit der insbesondere ein computerimplementiertes Verfahren nach einem der Ansprüche 10 bis 14 ausführbar ist **dadurch gekennzeichnet, dass** das Bildverarbeitungssystem (30) mit einer Zentralsteuereinrichtung (140) zum Austausch von steuerungsspezifischen Parametern und/oder Steuerdatensätzen verbunden ist und das Bildverarbeitungssystem (30) so konfiguriert ist, um auf Basis des ersten kabelspezifischen Bildparameter und des zweiten kabelspezifischen Bildparameter zumindest einen steuerungsspezifischen Parametern und/oder einen Steuerdatensatz zu erstellen und an die Zentralsteuereinrichtung (140) zum Steuern zumindest eines der Werkzeuge (22; 61; 71; 81; 90) zumindest einer der beiden Kabelbearbeitungsstationen (20; 60; 70; 80) zu übertragen.
